# EUROPEAN PATENT APPLICATION

(11) **EP 4 289 695 A2**
(43) Date of publication of application: **13.12.2023**
(21) Application number: 23175929.1
(22) Date of filing: 30.05.2023
(51) Int. Cl.: B60W 30/18, G08G 1/16, G01C 21/36, G06T 19/00, G06V 20/20, G06V 20/56

(54) **AR DISPLAY DEVICE FOR VEHICLE AND METHOD FOR OPERATING SAME**

(30) Priority: 10.06.2022 KR 20220070770; 19.10.2022 WO PCT/KR2022/015982
(71) Applicant: LG Electronics Inc., Yeongdeungpo-gu Seoul 07336 (KR)
(72) Inventor: LEE, Hansung, Seoul (KR); CHAE, Jisuk, Seoul (KR); SON, Junghoon, Seoul (KR); KIM, Ilwan, Seoul (KR); PARK, Jongtae, Seoul (KR)
(74) Representative: Vossius & Partner Patentanwälte Rechtsanwälte mbB

(57) **Abstract**

An Augmented Reality (AR) display device (800) interoperating with a vehicle and a method for operating the same are disclosed. An AR display device according to the present disclosure can recognize an occurrence of a notification event related to a driving lane based on ADAs sensing data of the vehicle, map data, vehicle data, etc., and accordingly display a guidance associated with a lane to be driven, which corresponds to the notification event, by using a second AR object separated from a first AR object indicating a current driving state of the vehicle.

## Description

The present disclosure relates to an Augmented Reality (AR) display device interoperating with a vehicle, a method for operating the same, and more specifically, to an AR display device capable of providing a guide associated with a lane change of a vehicle through an AR technology while the vehicle travels, and a method for operating the same.

For safety and convenience of a user who uses a vehicle, various sensors and devices are disposed at the vehicle, and functions of the vehicle are diversified. The functions of the vehicle may be divided into a convenience function for promoting driver's convenience, and a safety function for enhancing safety of the driver and/or pedestrians.

First, the convenience function has a development motive associated with the driver's convenience, such as providing infotainment (information + entertainment) to the vehicle, supporting a partially autonomous driving function, or helping the driver ensuring a field of vision at night or at a blind spot. For example, the convenience functions may include various functions, such as an active cruise control (ACC), a smart parking assist system (SPAS), a night vision (NV), a head up display (HUD), an around view monitor (AVM), an adaptive headlight system (AHS), and the like.

The safety function of the vehicle is a technique of ensuring safeties of the driver and/or pedestrians, and may include various functions, such as a lane departure warning system (LDWS), a lane keeping assist system (LKAS), an autonomous emergency braking (AEB), and the like.

Recently, Augmented Reality (AR) that outputs a graphic object through a windshield of a vehicle or a Head Up Display (HUD) or additionally outputs a graphic object to the real world by outputting the graphic object to an image captured by a camera is being actively developed. In particular, the development of technologies for guiding a route (or path) to a driver by utilizing an augmented reality (AR) technology is further increasing.

Meanwhile, in the past, even if such an augmented reality (AR) technology was applied to route guidance according to an AR driving mode, the existing driving guidance was displayed in an AR form. For example, driving direction change guidance was merely output as an AR image at a fixed position in the related art AR driving mode.

Accordingly, it was difficult to distinguish the AR image from other AR features of the AR driving mode, which caused a limit to providing intuitive route guidance. In addition, a driver who was inexperienced in driving was limited to driving a vehicle accurately according to the guidance.

Furthermore, in relation to a lane change of a vehicle, the related art has provided a lane departure warning alarm through ADAS or through BSD (blind spot warning system). However, in many cases, this rather causes frequent alarms or false alarms to interfere with driving. In addition, a driver inexperienced in driving has not received much help in changing lanes or avoiding collisions only by receiving such warning alarms.

Therefore, researches for performing a more intuitive and complete AR driving mode are required.

The present disclosure is directed to solving the above-mentioned problems and other drawbacks.

According to some embodiments, an aspect of the present disclosure is to provide an AR display device capable of performing a more intuitive and highly complete AR driving mode, and a method for operating the same.

According to some embodiments, another aspect of the present disclosure is to provide an AR display device capable of guiding an intuitive lane change route through AR by predicting a possibility of collision when the vehicle changes a lane to travel, and a method for operating the same.

According to some embodiments, another aspect of the present disclosure is to provide an AR display device capable of providing a notification through an intuitive AR interface to prevent a vehicle from departing from a lane on which the vehicle is currently traveling, and a method for operating the same.

According to some embodiments, another aspect of the present disclosure is to provide an AR display device capable of providing an AR guide route for a vehicle to safely passes a preceding vehicle, and a method for operating the same.

According to some embodiments, another aspect of the present disclosure is to provide an AR display device capable of providing an AR notification in a more intuitive form so as to prevent a vehicle from colliding with an object in front with which the vehicle is likely to collide, and a method for operating the same.

To this end, an AR display device of a vehicle according to the present disclosure may display a guide related to a lane change of a vehicle by varying an AR graphic interface. To this end, an occurrence of an event related to a lane on which a vehicle travels, for example, a lane change, a prediction of lane deviation and departure, overtaking of a preceding vehicle, etc., may be recognized based on sensing data of the vehicle, map data, ADAS sensing data, and the like.

Specifically, an AR display device according to the present disclosure may include a communication module configured to receive image data including a front image of the vehicle, location data including a current location of the vehicle, map data relating to the current location of the vehicle, and sensing data of the vehicle; a processor configured to activate a preset application to render an AR graphic interface overlapping the front image, the AR graphic interface including a first AR object indicating a current driving state of the vehicle and a second AR object indicating a guide for driving based on the current location of the vehicle and the map data. Also, the AR display device further includes a display configured to display a navigation screen including the front image overlapped by the AR graphic interface according to the rendering, wherein the processor is further configured to update the AR graphic interface, in response to a notification event related to a driving lane of the vehicle recognized based on the sensing data and the current location of the vehicle updated, in a manner that separating the second AR object from the first AR object and rendering to change the separated second AR object into an guide image associate with the driving lane corresponding to the notification event..

According to an embodiment, the notification event related to the driving lane of the vehicle may comprise any one of changing the driving lane, predicting departure from the driving lane, overtaking a front object, and detecting a collision-impending object within a current driving lane or a lane to be changed.

According to an embodiment, the sensing data of the vehicle may include a combination of ADAS sensing data of the vehicle and one or more of CAN data, GPS information, and navigation information of the vehicle.

According to an embodiment, the processor may update the AR graphic interface, in response to a determination of a change of the driving lane of the vehicle as the notification event based on the sensing data of the vehicle, such that the first AR object is rendered in a current driving lane of the vehicle on the front image and the separated second AR object is rendered to include a plurality of trajectories images toward a driving lane to be changed as the guide image.

According to an embodiment, the processor may detect an object approaching the vehicle based on the sensing data of the vehicle and the map data relating to the current location of the vehicle updated, and separate at least one of the plurality of trajectories images from the separated second AR object to point a location of the detected object by the separated at least one trajectory image.

According to an embodiment, when an object with a possibility of collision is detected in the driving lane to be changed, the processor may change the plurality of trajectories images to indicate that the driving lane change is not allowed, and update some of the changed trajectories images to indicate a location of the detected object.

According to an embodiment, the processor may update the plurality of trajectories images indicating that the driving lane change is not allowed to be located in the current driving lane of or a lane to which the driving lane change is not allowed.

According to an embodiment, the processor may update, in response to prediction of a departure of the driving lane as the notification event associated with the driving lane of the vehicle, the AR graphic interface such that the first AR object is rendered to indicate a driving pose of the vehicle in the current driving lane and the separated second AR object is rendered to include at least one of a first guide image for guiding a change in the driving pose of the vehicle and a second guide image for alerting a lane departure so as for the vehicle to keep the current driving lane.

According to an embodiment, the processor is further configured to determine a time point for warning departure from the driving lane based on a driving speed of the vehicle, and update the separated second AR object to be changed into the second guide at a location corresponding to an predicted lane departure direction at the determined time point.

According to an embodiment, the processor may update the driving pose indicated by the first AR object and update the separated second AR object to display the first guide at a center of the driving lane, when deviation within the driving lane is determined to exceed a threshold range.

According to an embodiment, the processor may update the separated second AR object to display a plurality of trajectories images indicating an avoidance route and an overtaking point of a target object, in response to recognition of the overtaking as the notification event related to the driving lane. According to an embodiment, the processor may render the separated second AR object to be joined with the first AR object when the driving lane change of the vehicle is completed while the vehicle travels along the avoidance route, and separate the second AR object from the first AR object to display the plurality of trajectories images indicating a location of a lane to return when a current location of the vehicle approaches the overtaking point of the target object within a predetermined distance.

According to an embodiment, during the overtaking, the processor may update the separated second AR object to keep displaying the plurality of trajectories images to be driven by the vehicle in the separated state until the vehicle completes the overtaking.

According to an embodiment, the processor may update the separated second AR object to include a crossing point of a lane corresponding to the overtaking point of the target object and driving speed information for passing the crossing point between the plurality of trajectories images to be driven by the vehicle, on the basis of the current location of the vehicle and driving state of the vehicle.

According to an embodiment the processor may calculate, in response to a detection of a front object with a possibility of collision based on ADAS sensing data of the vehicle, a location of the detected front object based on the current location of the vehicle and the ADAS sensing data of the vehicle, and render an alarm object to be changed depending on the calculated location overlapping the front image.

Alternatively, the above-identified functions performed by the processor of the AR display device may be performed by one or more processors located outside the AR display device.

Hereinafter, effects of an AR display device of a vehicle and a method for operating the same according to the present disclosure will be described.

In an AR display device and a method for operating the same according to some embodiments of the present disclosure, a current location of a vehicle and a predicted driving situation can be simultaneously guided on a front image, which is calibrated even without separate setting, using AR objects, thereby providing a more intuitive and realistic AR guidance to the vehicle.

In an AR display device and a method for operating the same according to some embodiments of the present disclosure, possibility of collision can be predicted when the vehicle changes lanes, so as to notify a driver of whether or not the lane change is allowed, instead of providing a simply warning notification. A separated AR object can be used to indicate prohibition of the lane change (non-allowable lane change) when the lane change is not allowed, and to provide an intuitive lane change guide route when the lane change is allowed, thereby greatly assisting safe driving and lane change driving.

In an AR display device and a method for operating the same according to some embodiments of the present disclosure, a lane departure can be prevented by providing an intuitive AR interface without driving interruption due to frequent warning alarms. When overtaking another vehicle in front, it is determined whether the vehicle can safely overtake the another vehicle in front, and route and driving speed for safe overtaking are provided to assist safe and convenient driving.

In an AR display device and a method for operating the same according to some embodiments of the present disclosure, a detection of a front/rear-side collision-impending object is notified using an intuitive AR object other than sound, helping safe driving without interfering with driving of a vehicle.
FIG. 1 is a diagram illustrating an example of a vehicle in accordance with an embodiment of the present disclosure.
FIG. 2 is a diagram illustrating the vehicle in accordance with the embodiment at various angles.
FIGS. 3 and 4 are diagrams illustrating an inside of the vehicle in accordance with the embodiment.
FIGS. 5 and 6 are reference views illustrating various objects in relation to traveling of the vehicle in accordance with the embodiment.
FIG. 7 is a block diagram illustrating a vehicle and an AR display device in accordance with an embodiment.
FIG. 8 is a detailed block diagram related to a processor of the AR display device in accordance with the embodiment.
FIG. 9 is a diagram referenced to describe a navigation screen in accordance with an embodiment, and FIG. 10 is a diagram referenced to describe an operation of generating the navigation screen of FIG. 9.
FIG. 11 is a flowchart referenced to describe a method for displaying an AR graphic interface on the navigation screen in accordance with the embodiment.
FIGS. 12A and 12B are diagrams illustrating an example of the AR graphic interface according to the embodiment of the present disclosure, which are referenced to describe separation and combination of first and second AR objects.
FIGS. 13A, 13B, and 13C are conceptual views referenced to explain a method of providing a UX related to a lane change using an AR graphic interface according to an embodiment of the present disclosure, and FIG. 14 is a flowchart thereof.
FIGS. 15A and 15B are conceptual views referenced to explain a method of providing a UX related to lane keeping using an AR graphic interface according to an embodiment of the present disclosure, and FIG. 16 is a flowchart thereof.
FIGS. 17A and 17B are conceptual views referenced to explain a method of providing a guide UX related to overtaking a preceding vehicle using an AR graphic interface according to an embodiment of the present disclosure.
FIG. 18 is a conceptual view referenced to explain a method of providing a guide UX related to AES (Automatic Emergency Steering) response using an AR graphic interface according to an embodiment of the present disclosure.
FIG. 19 is a flowchart referenced to explain a method of providing a UX related to a forward collision possibility warning using an AR graphic interface according to an embodiment of the present disclosure.

Hereinafter, embodiments disclosed herein will be described in detail with reference to the accompanying drawings, and the same or similar elements are designated with the same numeral references, regardless of the numerals in the drawings, and their redundant description will be omitted. In general, a suffix such as "module" and "unit" may be used to refer to elements or components. Use of such a suffix herein is merely intended to facilitate description of the specification, and the suffix itself is not intended to give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A vehicle according to an embodiment of the present disclosure may be understood as a conception including cars, motorcycles and the like. Hereinafter, the vehicle will be described based on a car.

The vehicle according to the embodiment of the present disclosure may be a conception including all of an internal combustion engine car having an engine as a power source, a hybrid vehicle having an engine and an electric motor as power sources, an electric vehicle having an electric motor as a power source, and the like.

In the following description, a left side of a vehicle refers to a left side in a driving direction of the vehicle, and a right side of the vehicle refers to a right side in the driving direction.

The term "system" disclosed herein may include at least one of a server device and a cloud device, but is not limited thereto. For example, a system may include one or more server devices. As another example, a system may include one or more cloud devices. As still another example, a system may be operated by including a server device and a cloud device together.

The term "map information" or "map data" disclosed herein refers to a meaning including map information, map data, and map-related applications, such as an image captured through a vision sensor such as a camera, 2D map information, 3D map information, digital twin 3D map, high-definition map (HD map), and maps in real/virtual spaces.

The term "Point of Interest (POI) information" disclosed herein is a point of interest selected based on the map information or map data, and may include pre-registered POI information (POI stored in a map of a cloud server), user-set POI information (e.g., home, school, company, etc.), driving-related POI information (e.g., destination, via point, gas station, rest area, parking lot, etc.), and top search POI information (e.g., POI with recent clicks/visits, hot places, etc.). This POI information may be updated in real time based on a current location of the vehicle.

The term "front image" disclosed herein is obtained through a vehicle or a vision sensor around the vehicle, or an AR camera of an AR display device, and for example, may include an image acquired or projected through a vision sensor (camera, laser sensor for image, etc.) while driving the vehicle, a real image itself projected on a windshield of the vehicle, or an image of a virtual space. That is, the front image may refer to a meaning including an image output through a display, an image projected through a laser sensor, or a real image itself viewed through the windshield of the vehicle.

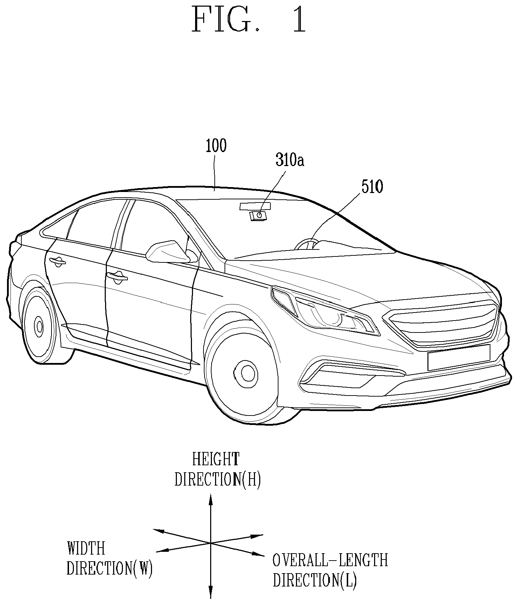

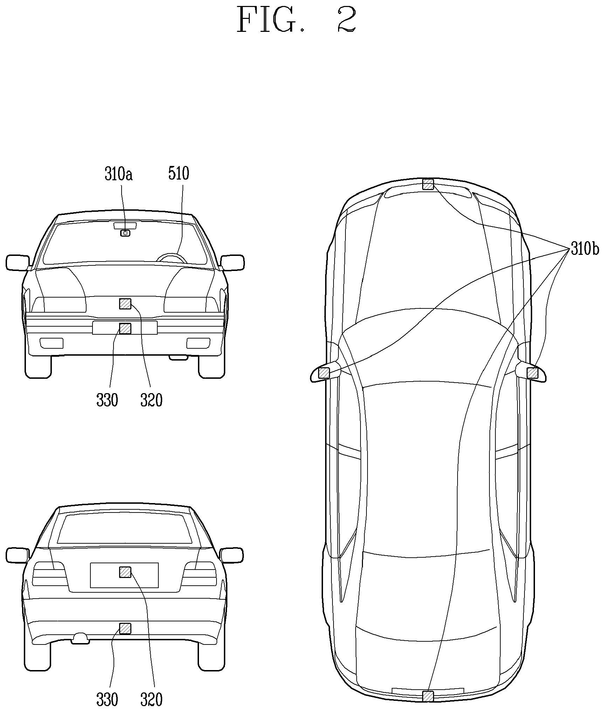

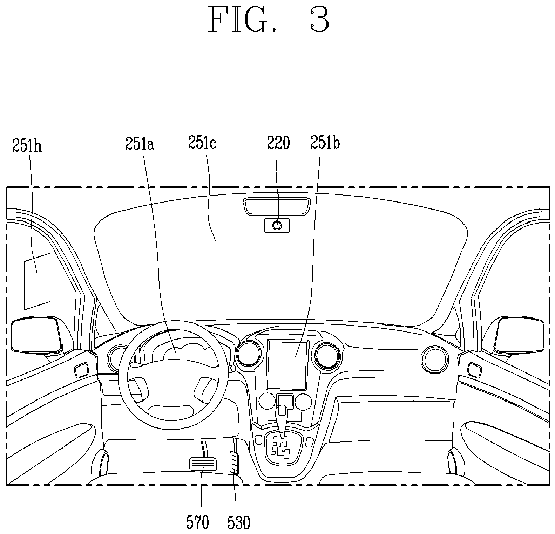

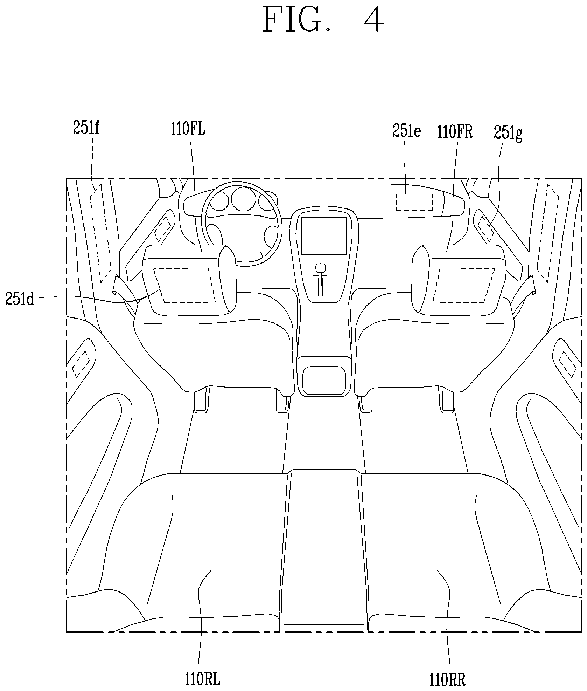

FIGS. 1 and 2 are diagrams illustrating the outside of a vehicle in accordance with the embodiment, and FIGS. 3 and 4 are diagrams illustrating the inside of the vehicle.

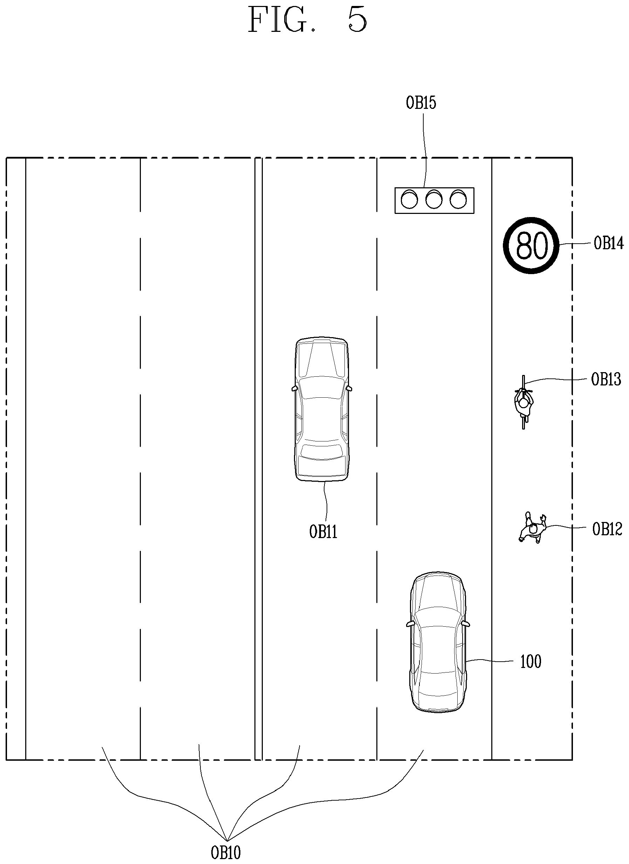

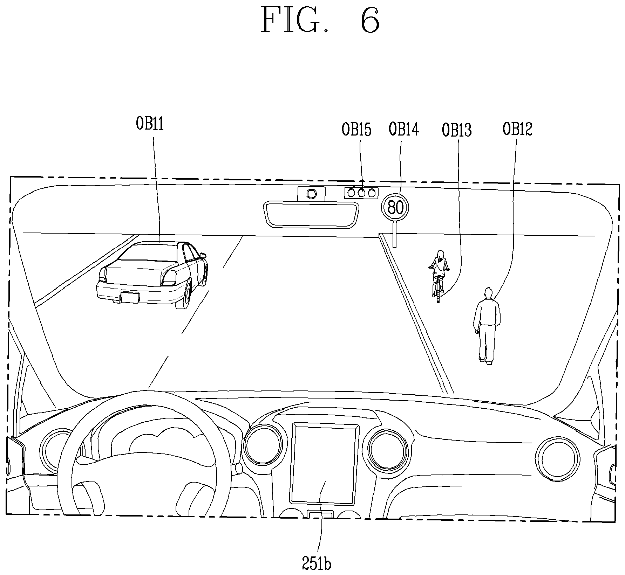

FIGS. 5 and 6 are reference views illustrating various objects in relation to traveling of the vehicle in accordance with the embodiment.

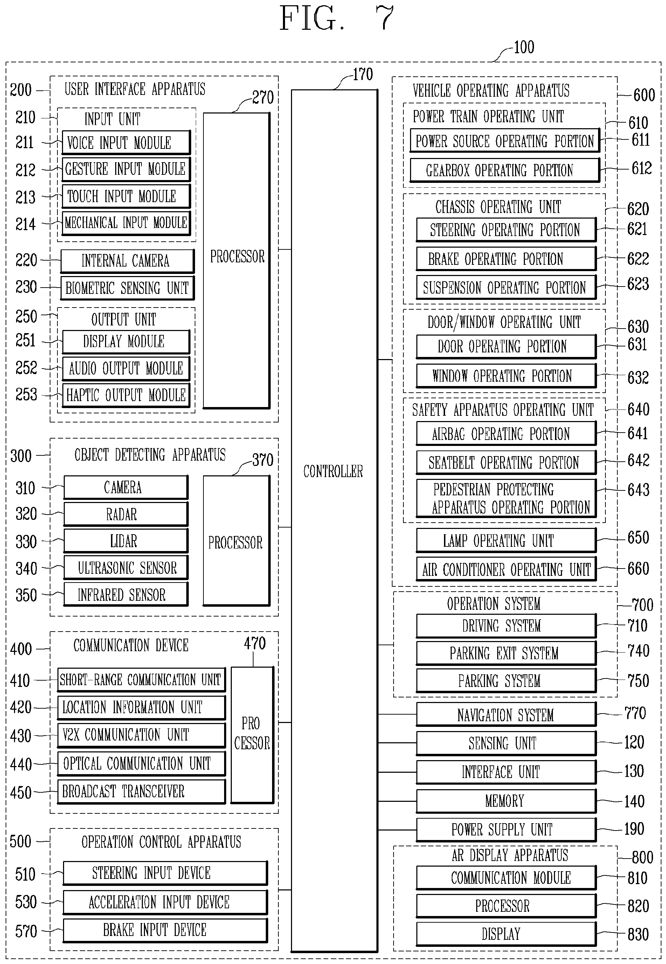

FIG. 7 is a block diagram illustrating the vehicle in accordance with the embodiment. FIG. 7 is a block diagram referred for explaining the vehicle according to the embodiment.

As illustrated in FIG. 1 to 7, a vehicle 100 may include wheels turning by a driving force, and a steering input device 510 for adjusting a driving (ongoing, moving) direction of the vehicle 100.

The vehicle 100 may be an autonomous vehicle. The vehicle 100 may be switched into an autonomous mode or a manual mode based on a user input. For example, the vehicle 100 may be converted from the manual mode into the autonomous mode or from the autonomous mode into the manual mode based on a user input received through a user interface apparatus 200 (hereinafter, referred to as 'user terminal').

The vehicle 100 may be switched into the autonomous mode or the manual mode based on driving environment information. The driving environment information may be generated based on object information provided from an object detecting apparatus 300. For example, the vehicle 100 may be switched from the manual mode into the autonomous mode or from the autonomous mode into the manual mode based on driving environment information generated in the object detecting apparatus 300. In an example, the vehicle 100 may be switched from the manual mode into the autonomous mode or from the autonomous mode into the manual mode based on driving environment information received through a communication apparatus 400.

The vehicle 100 may be switched from the manual mode into the autonomous mode or from the autonomous module into the manual mode based on information, data or signal provided from an external device.

When the vehicle 100 is driven in the autonomous mode, the autonomous vehicle 100 may be driven based on an operation system 700. For example, the autonomous vehicle 100 may be driven based on information, data or signals generated in a driving system 710, a parking exit system 740 and a parking system 750.

When the vehicle 100 is driven in the manual mode, the autonomous vehicle 100 may receive a user input for driving through a driving control apparatus 500. The vehicle 100 may be driven based on the user input received through the driving control apparatus 500.

An overall length refers to a length from a front end to a rear end of the vehicle 100, a width refers to a width of the vehicle 100, and a height refers to a length from a bottom of a wheel to a roof. In the following description, an overall-length direction L may referto a direction which is a criterion for measuring the overall length of the vehicle 100, a width direction W may refer to a direction that is a criterion for measuring a width of the vehicle 100, and a height direction H may refer to a direction that is a criterion for measuring a height of the vehicle 100.

As illustrated in FIG. 7, the vehicle 100 may include a user interface apparatus (hereinafter, referred to as 'user terminal') 200, an object detecting apparatus 300, a communication apparatus 400, a driving control apparatus 500, a vehicle operating apparatus 600, an operation system 700, a navigation system 770, a sensing unit 120, an interface unit 130, a memory 140, a controller 170 and a power supply unit 190.

According to embodiments, the vehicle 100 may include more components in addition to components to be explained in this specification or may not include some of those components to be explained in this specification.

The user interface apparatus 200 is an apparatus for communication between the vehicle 100 and a user. The user interface apparatus 200 may receive a user input and provide information generated in the vehicle 100 to the user. The vehicle 100 may implement user interfaces (Uls) or user experiences (UXs) through the user interface apparatus (hereinafter, referred to as 'user terminal') 200.

The user interface apparatus 200 may include an input unit 210, an internal camera 220, a biometric sensing unit 230, an output unit 250, and a processor 270. According to embodiments, the user interface apparatus 200 may include more components in addition to components to be explained in this specification or may not include some of those components to be explained in this specification.

The input unit 210 may allow the user to input information. Data collected in the input unit 210 may be analyzed by the processor 270 and processed as a user's control command.

The input unit 210 may be disposed inside the vehicle. For example, the input unit 210 may be disposed on one area of a steering wheel, one area of an instrument panel, one area of a seat, one area of each pillar, one area of a door, one area of a center console, one area of a headlining, one area of a sun visor, one area of a wind shield, one area of a window or the like.

The input unit 210 may include a voice input module 211, a gesture input module 212, a touch input module 213, and a mechanical input module 214.

The audio input module 211 may convert a user's voice input into an electric signal. The converted electric signal may be provided to the processor 270 or the controller 170. The audio input module 211 may include at least one microphone.

The gesture input module 212 may convert a user's gesture input into an electric signal. The converted electric signal may be provided to the processor 270 or the controller 170.

The gesture input module 212 may include at least one of an infrared sensor and an image sensor for detecting the user's gesture input. According to embodiments, the gesture input module 212 may detect a user's three-dimensional (3D) gesture input. To this end, the gesture input module 212 may include a light emitting diode outputting a plurality of infrared rays or a plurality of image sensors.

The gesture input module 212 may detect the user's 3D gesture input by a time of flight (TOF) method, a structured light method or a disparity method.

The touch input module 213 may convert the user's touch input into an electric signal. The converted electric signal may be provided to the processor 270 or the controller 170.

The touch input module 213 may include a touch sensor for detecting the user's touch input. According to an embodiment, the touch input module 213 may be integrated with the display module 251 so as to implement a touch screen. The touch screen may provide an input interface and an output interface between the vehicle 100 and the user.

The mechanical input module 214 may include at least one of a button, a dome switch, a jog wheel, and a jog switch. An electric signal generated by the mechanical input module 214 may be provided to the processor 270 or the controller 170. The mechanical input module 214 may be arranged on a steering wheel, a center fascia, a center console, a cockpit module, a door and the like.

The internal camera 220 may acquire an internal image of the vehicle. The processor 270 may detect a user's state based on the internal image of the vehicle. The processor 270 may acquire information related to the user's gaze from the internal image of the vehicle. The processor 270 may detect a user gesture from the internal image of the vehicle.

The biometric sensing unit 230 may acquire the user's biometric information. The biometric sensing unit 230 may include a sensor for detecting the user's biometric information and acquire fingerprint information and heart rate information regarding the user using the sensor. The biometric information may be used for user authentication.

The output unit 250 may generate an output related to a visual, audible or tactile signal. The output unit 250 may include at least one of a display module 251, an audio output module 252 and a haptic output module 253.

The display module 251 may output graphic objects corresponding to various types of information. The display module 251 may include at least one of a liquid crystal display (LCD), a thin film transistor-LCD (TFT LCD), an organic light-emitting diode (OLED), a flexible display, a three-dimensional (3D) display and an e-ink display.

The display module 251 may be inter-layered or integrated with a touch input module 213 to implement a touch screen.

The display module 251 may be implemented as a head up display (HUD). When the display module 251 is implemented as the HUD, the display module 251 may be provided with a projecting module so as to output information through an image which is projected on a windshield or a window.

The display module 251 may include a transparent display. The transparent display may be attached to the windshield or the window. The transparent display may have a predetermined degree of transparency and output a predetermined screen thereon. The transparent display may include at least one of a thin film electroluminescent (TFEL), a transparent OLED, a transparent LCD, a transmissive transparent display, and a transparent LED display. The transparent display may have adjustable transparency.

Meanwhile, the user interface apparatus 200 may include a plurality of display modules 251a to 251g.

The display module 251 may be disposed on one area of a steering wheel, one area 521a, 251b, 251e of an instrument panel, one area 251d of a seat, one area 251f of each pillar, one area 251g of a door, one area of a center console, one area of a headlining or one area of a sun visor, or implemented on one area 251c of a windshield or one area 251h of a window.

The audio output module 252 converts an electric signal provided from the processor 270 or the controller 170 into an audio signal for output. To this end, the audio output module 252 may include at least one speaker.

The haptic output module 253 generates a tactile output. For example, the haptic output module 253 may vibrate the steering wheel, a safety belt, a seat 110FL, 110FR, 110RL, 110RR such that the user can recognize such output.

The processor (hereinafter, referred to as 'controller') 270 may control an overall operation of each unit of the user interface apparatus 200. According to an embodiment, the user interface apparatus 200 may include a plurality of processors 270 or may not include any processor 270.

When the processor 270 is not included in the user interface apparatus 200, the user interface apparatus 200 may operate according to a control of a processor of another apparatus within the vehicle 100 or the controller 170.

Meanwhile, the user interface apparatus 200 may be called as a display apparatus for vehicle. The user interface apparatus 200 may operate according to the control of the controller 170.

The object detecting apparatus 300 is an apparatus for detecting an object located at outside of the vehicle 100. The object may be a variety of objects associated with driving (operation) of the vehicle 100. Referring to FIGS. 5 and 6, an object O may include a traffic lane OB10, another vehicle OB11, a pedestrian OB12, a two-wheeled vehicle OB13, traffic signals OB14 and OB15, light, a road, a structure, a speed hump, a terrain, an animal and the like.

The lane OB10 may be a driving lane, a lane next to the driving lane or a lane on which another vehicle comes in an opposite direction to the vehicle 100. The lanes OB10 may include left and right lines forming a lane.

The another vehicle OB11 may be a vehicle which is moving around the vehicle 100. The another vehicle OB11 may be a vehicle located within a predetermined distance from the vehicle 100. For example, the another vehicle OB11 may be a vehicle which moves before or after the vehicle 100.

The pedestrian OB12 may be a person located near the vehicle 100. The pedestrian OB12 may be a person located within a predetermined distance from the vehicle 100. For example, the pedestrian OB12 may be a person located on a sidewalk or roadway.

The two-wheeled vehicle OB12 may refer to a vehicle (transportation facility) that is located near the vehicle 100 and moves using two wheels. The two-wheeled vehicle OB12 may be a vehicle that is located within a predetermined distance from the vehicle 100 and has two wheels. For example, the two-wheeled vehicle OB13 may be a motorcycle or a bicycle that is located on a sidewalk or roadway.

The traffic signals may include a traffic light OB15, a traffic sign OB14 and a pattern or text drawn on a road surface.

The light may be light emitted from a lamp provided on another vehicle. The light may be light generated from a streetlamp. The light may be solar light.

The road may include a road surface, a curve, an upward slope, a downward slope and the like.

The structure may be an object that is located near a road and fixed on the ground. For example, the structure may include a streetlamp, a roadside tree, a building, an electric pole, a traffic light, a bridge and the like.

The terrain may include a mountain, a hill, and the like.

Meanwhile, objects may be classified into a moving object and a fixed object. For example, the moving object may be a concept including another vehicle and a pedestrian. The fixed object may be a concept including a traffic signal, a road and a structure, for example.

The object detecting apparatus 300 may include a camera 310, a radar 320, a LiDAR 330, an ultrasonic sensor 340, an infrared sensor 350, and a processor 370.

According to an embodiment, the object detecting apparatus 300 may further include other components in addition to the components described, or may not include some of the components described.

The camera 310 may be located on an appropriate portion outside the vehicle to acquire an external image of the vehicle. The camera 310 may be a mono camera, a stereo camera 310a, an around view monitoring (AVM) camera 310b or a 360-degree camera.

For example, the camera 310 may be disposed adjacent to a front windshield within the vehicle to acquire a front image of the vehicle. Or, the camera 310 may be disposed adjacent to a front bumper or a radiator grill.

For example, the camera 310 may be disposed adjacent to a rear glass within the vehicle to acquire a rear image of the vehicle. Or, the camera 310 may be disposed adjacent to a rear bumper, a trunk or a tail gate.

For example, the camera 310 may be disposed adjacent to at least one of side windows within the vehicle to acquire a side image of the vehicle. Or, the camera 310 may be disposed adjacent to a side mirror, a fender or a door.

The camera 310 may provide an acquired image to the processor 370.

The radar 320 may include electric wave transmitting and receiving portions. The radar 320 may be implemented as a pulse radar or a continuous wave radar according to a principle of emitting electric waves. The radar 320 may be implemented in a frequency modulated continuous wave (FMCW) manner or a frequency shift Keyong (FSK) manner according to a signal waveform, among the continuous wave radar methods.

The radar 320 may detect an object in a time of flight (TOF) manner or a phase-shift manner through the medium of the electric wave, and detect a position of the detected object, a distance from the detected object and a relative speed with the detected object.

The radar 320 may be disposed on an appropriate position outside the vehicle for detecting an object which is located at a front, rear or side of the vehicle.

The LiDAR 330 may include laser transmitting and receiving portions. The LiDAR 330 may be implemented in a time of flight (TOF) manner or a phase-shift manner.

The LiDAR 330 may be implemented as a drive type or a non-drive type.

For the drive type, the LiDAR 330 may be rotated by a motor and detect object near the vehicle 100.

For the non-drive type, the LiDAR 330 may detect, through light steering, objects which are located within a predetermined range based on the vehicle 100. The vehicle 100 may include a plurality of non-drive type LiDARs 330.

The LiDAR 330 may detect an object in a TOP manner or a phase-shift manner through the medium of a laser beam, and detect a position of the detected object, a distance from the detected object and a relative speed with the detected object.

The LiDAR 330 may be disposed on an appropriate position outside the vehicle for detecting an object located at the front, rear or side of the vehicle.

The ultrasonic sensor 340 may include ultrasonic wave transmitting and receiving portions. The ultrasonic sensor 340 may detect an object based on an ultrasonic wave, and detect a position of the detected object, a distance from the detected object and a relative speed with the detected object.

The ultrasonic sensor 340 may be disposed on an appropriate position outside the vehicle for detecting an object located at the front, rear or side of the vehicle.

The infrared sensor 350 may include infrared light transmitting and receiving portions. The infrared sensor 340 may detect an object based on infrared light, and detect a position of the detected object, a distance from the detected object and a relative speed with the detected object.

The infrared sensor 350 may be disposed on an appropriate position outside the vehicle for detecting an object located at the front, rear or side of the vehicle.

The processor 370 may control an overall operation of each unit of the object detecting apparatus 300.

The processor 370 may detect an object based on an acquired image, and track the object. The processor 370 may execute operations, such as a calculation of a distance from the object, a calculation of a relative speed with the object and the like, through an image processing algorithm.

The processor 370 may detect an object based on a reflected electromagnetic wave which an emitted electromagnetic wave is reflected from the object, and track the object. The processor 370 may execute operations, such as a calculation of a distance from the object, a calculation of a relative speed with the object and the like, based on the electromagnetic wave.

The processor 370 may detect an object based on a reflected laser beam which an emitted laser beam is reflected from the object, and track the object. The processor 370 may execute operations, such as a calculation of a distance from the object, a calculation of a relative speed with the object and the like, based on the laser beam.

The processor 370 may detect an object based on a reflected ultrasonic wave which an emitted ultrasonic wave is reflected from the object, and track the object. The processor 370 may execute operations, such as a calculation of a distance from the object, a calculation of a relative speed with the object and the like, based on the ultrasonic wave.

The processor 370 may detect an object based on reflected infrared light which emitted infrared light is reflected from the object, and track the object. The processor 370 may execute operations, such as a calculation of a distance from the object, a calculation of a relative speed with the object and the like, based on the infrared light.

According to an embodiment, the object detecting apparatus 300 may include a plurality of processors 370 or may not include any processor 370. For example, each of the camera 310, the radar 320, the LiDAR 330, the ultrasonic sensor 340 and the infrared sensor 350 may include the processor in an individual manner.

When the processor 370 is not included in the object detecting apparatus 300, the object detecting apparatus 300 may operate according to the control of a processor of an apparatus within the vehicle 100 or the controller 170.

The object detecting apparatus 400 may operate according to the control of the controller 170.

The communication apparatus 400 is an apparatus for performing communication with an external device. Here, the external device may be another vehicle, a mobile terminal or a server.

The communication apparatus 400 may perform the communication by including at least one of a transmitting antenna, a receiving antenna, and a radio frequency (RF) circuit and an RF element in which various communication protocols are executable.

The communication apparatus 400 may include a short-range communication unit 410, a location information unit 420, a V2X communication unit 430, an optical communication unit 440, a broadcast transceiver 450 and a processor 470.

According to an implementation, the communication apparatus 400 may further include other components in addition to the components described, or may not include some of the components described.

The short-range communication unit 410 is a unit for facilitating short-range communications. Suitable technologies for implementing such short-range communications may include Bluetooth^{™}, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like.

The short-range communication unit 410 may construct short-range area networks to perform short-range communication between the vehicle 100 and at least one external device.

The location information unit 420 is a unit for acquiring position information. For example, the location information unit 420 may include a Global Positioning System (GPS) module or a Differential Global Positioning System (DGPS) module.

The V2X communication unit 430 is a unit for performing wireless communications with a server (Vehicle to Infra; V2I), another vehicle (Vehicle to Vehicle; V2V), or a pedestrian (Vehicle to Pedestrian; V2P). The V2X communication unit 430 may include an RF circuit implementing a communication protocol with the infra (V2I), a communication protocol between the vehicles (V2V) and a communication protocol with a pedestrian (V2P).

The optical communication unit 440 is a unit for performing communication with an external device through the medium of light. The optical communication unit 440 may include an optical transmission part for converting an electric signal into an optical signal and transmitting the optical signal to the outside, and an optical reception part for converting the received optical signal into the electric signal.

According to an embodiment, the light-emitting diode may be integrated with lamps provided on the vehicle 100.

The broadcast transceiver 450 may be a unit for receiving a broadcast signal from an external broadcast managing entity or transmitting a broadcast signal to the broadcast managing entity via a broadcast channel. The broadcast channel may include a satellite channel, a terrestrial channel, or both. The broadcast signal may include a TV broadcast signal, a radio broadcast signal, and a data broadcast signal.

The processor 470 may control an overall operation of each unit of the communication apparatus 400.

According to an embodiment, the communication apparatus 400 may include a plurality of processors 470 or may not include any processor 470.

When the processor 470 is not included in the communication apparatus 400, the communication apparatus 400 may operate according to the control of a processor of another device within the vehicle 100 or the controller 170.

Meanwhile, the communication apparatus 400 may implement a display apparatus for a vehicle together with the user interface apparatus 200. In this instance, the display device for the vehicle may be referred to as a telematics apparatus or an Audio Video Navigation (AVN) apparatus.

The communication apparatus 400 may operate according to the control of the controller 170.

The driving control apparatus 500 is an apparatus for receiving a user input for driving.

In a manual mode, the vehicle 100 may be operated based on a signal provided by the driving control apparatus 500.

The driving control apparatus 500 may include a steering input device 510, an acceleration input device 530 and a brake input device 570.

The steering input device 510 may receive an input regarding a driving (ongoing) direction of the vehicle 100 from the user. The steering input device 510 is preferably configured in the form of a wheel allowing a steering input in a rotating manner. According to some embodiments, the steering input device may also be configured in a shape of a touch screen, a touch pad or a button.

The acceleration input device 530 may receive an input for accelerating the vehicle 100 from the user. The brake input device 570 may receive an input for braking the vehicle 100 from the user. Each of the acceleration input device 530 and the brake input device 570 is preferably configured in the form of a pedal. In some implementations, the acceleration input device or the brake input device may also be configured in a shape of a touch screen, a touch pad or a button.

The driving control apparatus 500 may operate according to the control of the controller 170.

The vehicle operating apparatus 600 is an apparatus for electrically controlling operations of various devices within the vehicle 100.

The vehicle operating apparatus 600 may include a power train operating unit 610, a chassis operating unit 620, a door/window operating unit 630, a safety apparatus operating unit 640, a lamp operating unit 650, and an air-conditioner operating unit 660.

According to an embodiment, the communication apparatus 600 may further include other components in addition to the components described, or may not include some of the components described.

In some examples, the vehicle operating apparatus 600 may include a processor. Each unit of the vehicle operating apparatus 600 may individually include a processor.

The power train operating unit 610 may control an operation of a power train device.

The power train operating unit 610 may include a power source operating portion 611 and a gearbox operating portion 612.

The power source operating portion 611 may perform a control for a power source of the vehicle 100.

For example, upon using a fossil fuel-based engine as the power source, the power source operating portion 611 may perform an electronic control for the engine. Accordingly, an output torque and the like of the engine can be controlled. The power source operating portion 611 may adjust the engine output torque according to the control of the controller 170.

For example, upon using an electric energy-based motor as the power source, the power source operating portion 611 may perform a control for the motor. The power source operating portion 611 may adjust a rotating speed, a torque and the like of the motor according to the control of the controller 170.

The gearbox operating portion 612 may perform a control for a gearbox. The gearbox operating portion 612 may adjust a state of the gearbox. The gearbox operating portion 612 may change the state of the gearbox into drive (forward) (D), reverse (R), neutral (N) or parking (P).

Meanwhile, when an engine is the power source, the gearbox operating portion 612 may adjust a locked state of a gear in the drive (D) state.

The chassis operating unit 620 may control an operation of a chassis device. The chassis operating unit 620 may include a steering operating portion 621, a brake operating portion 622 and a suspension operating portion 623.

The steering operating portion 621 may perform an electronic control for a steering apparatus within the vehicle 100. The steering operating portion 621 may change a driving direction of the vehicle.

The brake operating portion 622 may perform an electronic control for a brake apparatus within the vehicle 100. For example, the brake operating portion 622 may control an operation of brakes provided at wheels to reduce speed of the vehicle 100.

Meanwhile, the brake operating portion 622 may individually control each of a plurality of brakes. The brake operating portion 622 may differently control braking force applied to each of a plurality of wheels.

The suspension operating portion 623 may perform an electronic control for a suspension apparatus within the vehicle 100. For example, the suspension operating portion 623 may control the suspension apparatus to reduce vibration of the vehicle 100 when a bump is present on a road. Meanwhile, the suspension operating portion 623 may individually control each of a plurality of suspensions.

The door/window operating unit 630 may perform an electronic control for a door apparatus or a window apparatus within the vehicle 100.

The door/window operating unit 630 may include a door operating portion 631 and a window operating portion 632.

The door operating portion 631 may perform the control for the door apparatus. The door operating portion 631 may control opening or closing of a plurality of doors of the vehicle 100. The door operating portion 631 may control opening or closing of a trunk or a tail gate. The door operating portion 631 may control opening or closing of a sunroof.

The window operating portion 632 may perform the electronic control for the window apparatus. The window operating portion 632 may control opening or closing of a plurality of windows of the vehicle 100.

The safety apparatus operating unit 640 may perform an electronic control for various safety apparatuses within the vehicle 100.

The safety apparatus operating unit 640 may include an airbag operating portion 641, a seatbelt operating portion 642 and a pedestrian protecting apparatus operating portion 643.

The airbag operating portion 641 may perform an electronic control for an airbag apparatus within the vehicle 100. For example, the airbag operating portion 641 may control the airbag to be deployed upon a detection of a risk.

The seatbelt operating portion 642 may perform an electronic control for a seatbelt apparatus within the vehicle 100. For example, the seatbelt operating portion 642 may control passengers to be motionlessly seated in seats 110FL, 110FR, 110RL, 110RR using seatbelts upon a detection of a risk.

The pedestrian protection apparatus operating portion 643 may perform an electronic control for a hood lift and a pedestrian airbag. For example, the pedestrian protection apparatus operating portion 643 may control the hood lift and the pedestrian airbag to be open up upon detecting pedestrian collision.

The lamp operating unit 650 may perform an electronic control for various lamp apparatuses within the vehicle 100.

The air-conditioner operating unit 660 may perform an electronic control for an air conditioner within the vehicle 100. For example, the air-conditioner operating unit 660 may control the air conditioner to supply cold air into the vehicle when internal temperature of the vehicle is high.

The vehicle operating apparatus 600 may include a processor. Each unit of the vehicle operating apparatus 600 may individually include a processor.

The vehicle operating apparatus 600 may operate according to the control of the controller 170.

The operation system 700 is a system that controls various driving modes of the vehicle 100. The operation system 700 may operate in an autonomous driving mode.

The operation system 700 may include a driving system 710, a parking exit system 740 and a parking system 750.

According to an embodiment, the communication apparatus 700 may further include other components in addition to the components described, or may not include some of the components described.

Meanwhile, the operation system 700 may include a processor. Each unit of the operation system 700 may individually include at least one processor.

According to embodiments, the operation system may be a sub concept of the controller 170 when it is implemented in a software configuration.

Meanwhile, according to implementation, the operation system 700 may be a concept including at least one of the user interface apparatus 200, the object detecting apparatus 300, the communication apparatus 400, the vehicle operating apparatus 600, and the controller 170.

The driving system 710 may perform driving of the vehicle 100.

The driving system 710 may receive navigation information from a navigation system 770, transmit a control signal to the vehicle operating apparatus 600, and perform driving of the vehicle 100. The driving system 710 may receive object information from the object detecting apparatus 300, transmit a control signal to the vehicle operating apparatus 600 and perform driving of the vehicle 100. The driving system 710 may receive a signal from an external device through the communication apparatus 400, transmit a control signal to the vehicle operating apparatus 600, and perform driving of the vehicle 100.

The parking exit system 740 may perform an exit of the vehicle 100 from a parking lot.

The parking exit system 740 may receive navigation information from the navigation system 770, transmit a control signal to the vehicle operating apparatus 600, and perform the exit of the vehicle 100 from the parking lot. The parking exit system 740 may receive object information from the object detecting apparatus 300, transmit a control signal to the vehicle operating apparatus 600 and perform the exit of the vehicle 100 from the parking lot. The parking exit system 740 may receive a signal from an external device through the communication apparatus 400, transmit a control signal to the vehicle operating apparatus 600, and perform the exit of the vehicle 100 from the parking lot.

The parking system 750 may perform parking of the vehicle 100.

The parking system 750 may receive navigation information from the navigation system 770, transmit a control signal to the vehicle operating apparatus 600, and park the vehicle 100. The parking system 750 may receive object information from the object detecting apparatus 300, transmit a control signal to the vehicle operating apparatus 600 and park the vehicle 100. The parking system 750 may receive a signal from an external device through the communication apparatus 400, transmit a control signal to the vehicle operating apparatus 600, and park the vehicle 100.

The navigation system 770 may provide navigation information. The navigation information may include at least one of map information, information regarding a set destination, path information according to the set destination, information regarding various objects on a path, lane information and current location information of the vehicle.

The navigation system 770 may include a memory and a processor. The memory may store the navigation information. The processor may control an operation of the navigation system 770.

According to embodiments, the navigation system 770 may update prestored information by receiving information from an external device through the communication apparatus 400.

According to embodiments, the navigation system 770 may be classified as a sub component of the user interface apparatus 200.

The sensing unit 120 may sense a status of the vehicle. The sensing unit 120 may include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing unit 120 may acquire sensing signals with respect to vehicle-related information, such as a pose, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing unit 120 may further include an accelerator sensor, a pressure sensor, an engine speed sensor, an air flow sensor (AFS), an air temperature sensor (ATS), a watertemperature sensor (WTS), a throttle position sensor (TPS), a TDC sensor, a crank angle sensor (CAS), and the like.

The interface unit 130 may serve as a path allowing the vehicle 100 to interface with various types of external devices connected thereto. For example, the interface unit 130 may be provided with a port connectable with a mobile terminal, and connected to the mobile terminal through the port. In this instance, the interface unit 130 may exchange data with the mobile terminal.

In some examples, the interface unit 130 may serve as a path for supplying electric energy to the connected mobile terminal. When the mobile terminal is electrically connected to the interface unit 130, the interface unit 130 supplies electric energy supplied from a power supply unit 190 to the mobile terminal according to the control of the controller 170.

The memory 140 is electrically connected to the controller 170. The memory 140 may store basic data for units, control data for controlling operations of units and input/output data. The memory 140 may be a variety of storage devices, such as ROM, RAM, EPROM, a flash drive, a hard drive and the like in a hardware configuration. The memory 140 may store various data for overall operations of the vehicle 100, such as programs for processing or controlling the controller 170.

According to embodiments, the memory 140 may be integrated with the controller 170 or implemented as a sub component of the controller 170.

The controller 170 may control an overall operation of each unit of the vehicle 100. The controller 170 may be referred to as an Electronic Control Unit (ECU).

The power supply unit 190 may supply power required for an operation of each component according to the control of the controller 170. Specifically, the power supply unit 190 may receive power supplied from an internal battery of the vehicle, and the like.

At least one processor and the controller 170 included in the vehicle 100 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro controllers, microprocessors, and electric units performing other functions.

Meanwhile, an AR display device 800 according to the present disclosure may display an AR graphic interface indicating a driving state of a vehicle 100 on a front image of the vehicle 100 (or a windshield of the vehicle) in real time through AR merging, on the basis of navigation information of the vehicle 100 and data received from an AR camera.

To this end, the AR display device 800 includes a communication module 810 for communicating with other devices/systems, servers, and vehicles, a processor 820 for controlling overall operations of the AR display device 800, and a display 830 for displaying a navigation screen including a front image upon which an AR graphic interface is rendered.

The communication module 810 may receive image data including a front image of the vehicle, location data including a current location of the vehicle, and map data of the vehicle including a map relating to the current location of the vehicle.

The term 'front image' or 'driving image' disclosed herein refers to an image captured through a camera sensor (or including smart glass having such a function) in a direction in which the vehicle is moving. This term may also refer to an image reflected on an LCD screen through the camera sensor, a real space image shown on a windshield/dashboard and/or a digital twin 3D image.

The term 'navigation screen including the front image (or driving image)' disclosed herein may mean that a front image implemented in the form of one of a front image captured through a camera of a vehicle, an image reflected on an LCD screen, a real space image shown on a windshield, etc., and/or a digital twin 3D image is layered on a navigation screen generated based on a current location and navigation information.

The navigation screen may be an AR navigation screen to which an AR technology is applied.

In addition, the term 'AR graphic interface' disclosed herein is a graphic user interface to which an augmented reality (AR) technology is applied, and AR merging of the AR graphic interface is performed on a front image of a vehicle in real time.

The AR graphic interface in this disclosure may be an AR graphic image representing a current driving state of the vehicle. In addition, the AR graphic interface disclosed herein may be an AR graphic image that further indicates a guide for a driving situation of the vehicle simultaneously with the current driving state of the vehicle. At this time, the guide for the driving situation of the vehicle is displayed on the front image of the vehicle at a predetermined distance and/or a predetermined time ahead of the corresponding driving situation. In addition, the AR graphic interface disclosed herein may be an AR graphic image that moves according to a current driving state of the vehicle and/or a driving situation of the vehicle.

Referring to FIG. 7, the AR display device 800 according to the embodiment of the present disclosure may be implemented as a part of an electrical component or system of the vehicle 100, or may be implemented as a separate independent device or system. Alternatively, the AR display device 800 may be implemented in the form of a program including instructions operated by a processor such as a user terminal of the vehicle 100 or the like.

The AR display device 800 may communicate with the vehicle 100, other devices, and/or servers to receive a front image of the vehicle acquired through an AR camera and sensing data acquired through sensors (e.g., a gyroscopic sensor, an acceleration sensor, a gravity sensor, a geomagnetic sensor, a temperature sensor, etc.) provided in the vehicle.

The AR display device 800 may operate a preset application, for example, an (AR) navigation application.

The AR display device 800 may render an AR graphic interface, which represents the current driving state of the vehicle based on map data (e.g., a map relating to a current location of the vehicle, route information, POI information, etc.) of the vehicle, sensing data, and a front image obtained by a camera, and provide the rendered AR graphic interface to an AR GUI surface and an AR camera surface of the navigation application in real time..

The AR display device 800 may render an AR object separated from the AR graphic interface to provide (indicate, display) a guide for a driving situation of the vehicle, based on the map data (e.g., the route information, the POI information, etc.), the sensing data, and the front image obtained by the camera, and provide the rendered AR object to the AR GUI surface and the AR camera surface of the navigation application in real time.

In this case, the separated AR object may be named 'second AR object', and the remaining part of the AR graphic interface after the second AR object is separated may be named 'first AR object'. That is, it can be said that the AR graphic interface includes the first AR object displaying the current driving state of the vehicle and the second AR object displaying the guide for the driving situation of the vehicle.

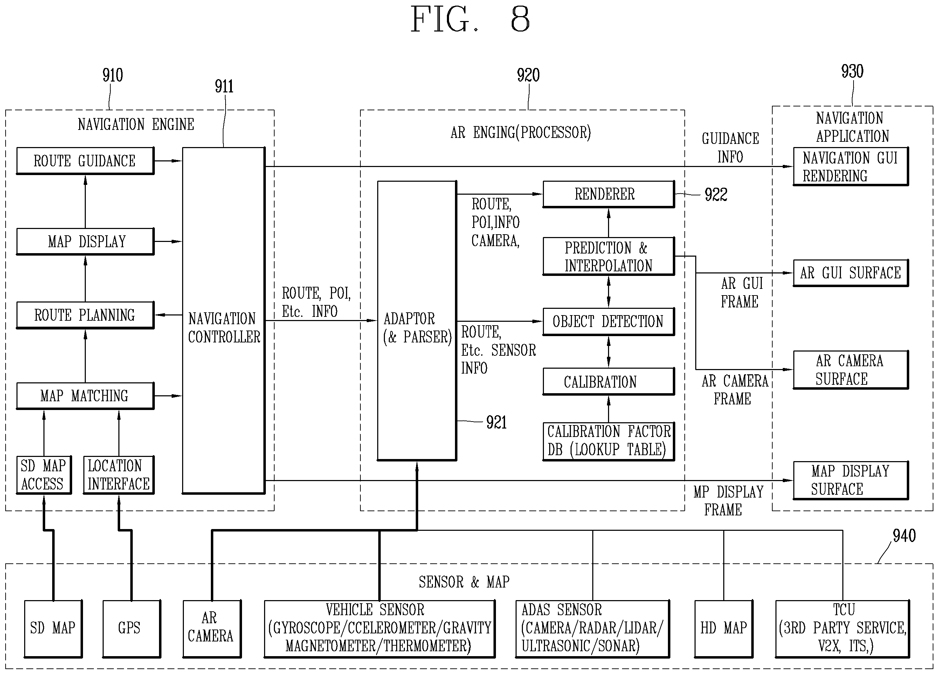

Hereinafter, FIG. 8 is a detailed block diagram related to a processor 820 of the AR display device 800 in accordance with the embodiment.

The conceptual diagram illustrated in FIG. 8 may include a configuration related to operations performed by the processor 820 of the AR display device 800 and information, data, and programs used for the operations. In this aspect, the block diagram illustrated in FIG. 8 may also be used to mean a service provided through the processor 820 and/or a system executed/implemented by the processor 820. Hereinafter, for convenience of explanation, it will be referred to as the processor 820.

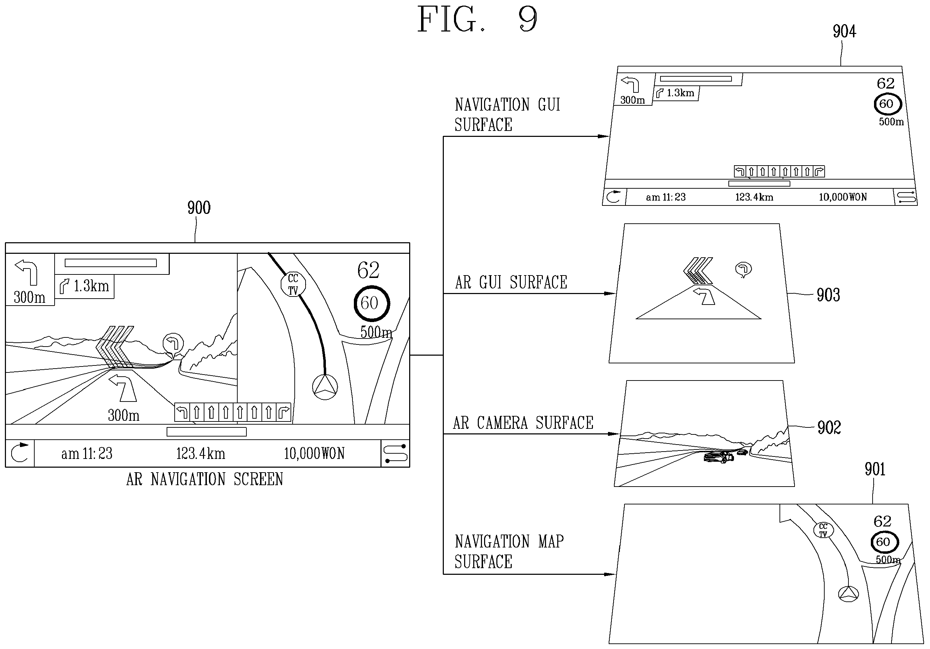

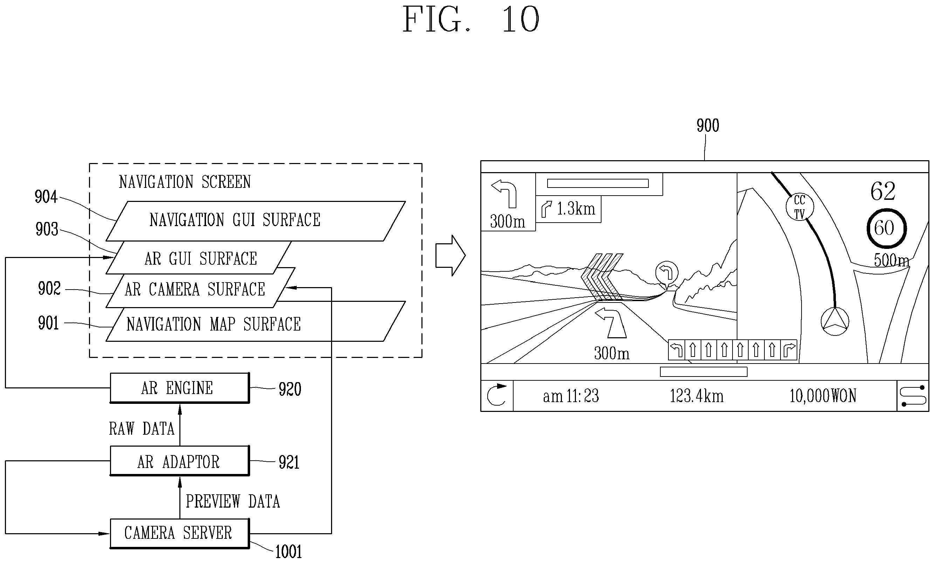

FIG. 9 is a diagram referenced to describe a navigation screen in accordance with an embodiment, and FIG. 10 is a diagram referenced to describe an operation of generating the navigation screen of FIG. 9.

Referring to FIG. 8, the processor 820 may include a navigation engine 910, an augmented reality (AR) engine 920, a navigation application 930, and a sensor and map 940 or may interoperably drive such components.

The navigation engine 910 may receive map data and location data (e.g. GPS data) from a vehicle or the like. The navigation engine 910 may perform map matching based on the map data and the GPS data. The navigation engine 910 may perform route planning according to the map matching. The navigation engine 910 may display a map and perform route guidance. The navigation engine 910 may provide route guidance information to the navigation application 930.

The navigation engine 910 may include a navigation controller 911. The navigation controller 911 may receive map matching data, map display data, and route guidance data.

The navigation controller 911 may provide route data, point of interest (POI) data, and the like to the AR engine 920 based on the received map matching data, map display data, and route guidance data.

The navigation controller 911 may provide the route guidance data and a map display frame to the navigation application 930.

The AR engine 920 may include an adapter 921 and a renderer 922. The adapter 921 may receive front image data acquired from a camera (e.g., AR camera), and sensing data acquired from sensors of the vehicle, for example, gyroscopic sensor (Gyroscope), an accelerometer sensor (Accelerometer), a gravity sensor (Gravity), and a geomagnetic sensor (Magnetometer), and/or a temperature sensor (Thermometer).

The AR engine 920 may receive sensing data acquired from an ADAS sensor (e.g., camera, radar, lidar, ultrasound, or sonar). For example, the AR engine 920 may acquire driving-related sensing data, such as a driving direction and speed, a distance from a lane, and the like, as sensing data through the ADAS sensor.

The AR engine 920 may receive high-definition (HD) map data and a program related to the HD map data. Here, the high-definition map (HD Map) is a map for providing information related to detailed roads and surrounding terrains to an autonomous vehicle in advance, and has an accuracy within an error range of about 10 cm. The HD map also stores, in a 3D digital form, traffic lights, signs, curbs, road marks, and various structures as well as lane-unit information such as road centerlines and boundary lines.

The AR engine 920 may receive acquired sensing data, received data, control data, and related programs from a Telematics Control Unit (TCU) (e.g., third-party service, V2X, ITS communication, etc.).

The TCU of the sensor and map 940 is a communication control device mounted on the vehicle, and may perform communication with, for example, a vehicle to everything (V2X), which is a communication technology of communicating with various elements on roads for autonomous vehicles, (e.g., situation data collectible through V2V and V2I), and Intelligent Transport Systems (ITS) or Cooperative Intelligent Transport Systems (C-ITS), which are cooperative intelligent transport system technologies.

The AR engine 920 may perform calibration on a front image based on data provided from a calibration factor database (DB). The AR engine 920 may perform object detection based on front image data and route data. The AR engine 920 may perform prediction and interpolation based on the detected object.

The renderer 922 may perform rendering based on the route data, the POI data, and result data of the prediction and interpolation. The renderer 922 may provide an AR graphical user interface (GUI) frame and an AR camera frame to the navigation application 930.

The navigation application 930 may generate an AR navigation screen 900.

According to the embodiment of Fig. 8, the processor 820 of the AR display device 800 includes the navigation engine 910, the AR engine 920 and the navigation application 930. Alternatively, the processor 820 may include the AR engine 920 only. In other words, the AR engine 920 only may be executed by the processor 820, and the navigation engine 910 and the navigation application 930 may be executed by one or more processors outside the AR display device 800. Further alternatively, even the AR engine 920 also may be executed by one or more processors outside the AR display device 800. In this alternative scene, the AR display device 800 may only perform receiving rendered images and displaying them on the display 830. If necessary, the AR display device 800 may convert the rendered images suitably for a form factor of the AR display device 800 or decrypt the encrypted rendered images. When the situation corresponding to the condition

Referring to FIG. 9, the AR navigation screen 900 may include a navigation map surface 901, an AR camera surface 902, an AR GUI surface 903, and a navigation GUI surface 904.

The navigation application 930 may create the navigation map surface 901 based on the map display frame provided from the navigation controller 911. The navigation application 930 may create the AR camera surface 902 based on the AR camera frame provided from the renderer 922. The navigation application 930 may create the AR GUI surface 903 based on the AR GUI frame provided from the renderer 922. The navigation application 930 may generate the navigation GUI surface 904 based on the route guidance data provided from the navigation controller 911.

Referring to FIGS. 8 and 10 together, when the navigation application 930 is driven, the navigation application 930 may generate the navigation map surface 901, the AR camera surface 902, the AR GUI surface 903, and the navigation GUI surface 904.

The navigation application 930 may provide parameters of the AR camera surface 902 and parameters of the AR GUI surface 903 to the AR engine 920.

The AR engine 920 may register a callback function to receive front image data from a camera server 1001. The camera server 1001 may be understood as a concept included in a memory of the AR display device 800, for example.

The AR engine 920 may receive and crop the front image data. Cropping may include adjusting a size or position of an image, editing a partial region, adjusting transparency, and the like. The navigation application 930 may display the cropped front image on the AR camera surface 902. The AR engine 920 may perform AR merging in real time. Also, the navigation application 930 may display an AR GUI on the AR GUI surface 903 based on the cropped front image.

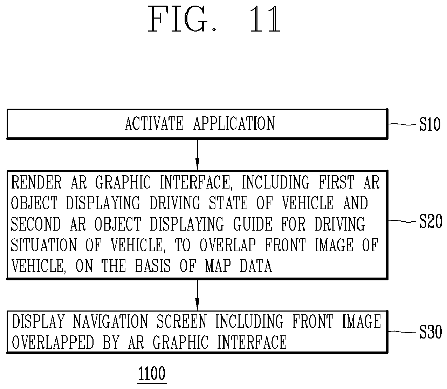

FIG. 11 is a flowchart referenced to describe a method 1100 for displaying an AR graphic interface on the navigation screen in accordance with the embodiment.

Each process of FIG. 11 may be performed by a processor (or the AR engine) unless otherwise noted. In addition, the processes of FIG. 11 may be performed by including the operations of the navigation engine 910, the AR engine 920, and the navigation application 930 by the processor 820 described above with reference to FIGS. 8 to 10, or at least some of the operations may be performed before or after the processes of FIG. 11.

Referring to FIG. 11, the method starts by activating a preset application (S10).

The preset application may be pre-installed on the AR display device 800 or may be driven by another device/server cooperating therewith, for example, in response to an execution of an AR mode of the vehicle. The preset application may be, for example, a navigation application executed in the AR mode during the driving of the vehicle.

The navigation application, for example, receives a route guidance and a map display frame based on map data and GPS data from the navigation engine, and generates navigation GUI rendering and a map display surface, respectively.

In addition, the navigation application, for example, generates an AR GUI surface by receiving an AR GUI frame from the AR engine, and generates an AR camera surface by receiving an AR camera frame. The navigation application renders the generated map display surface, AR camera surface, and AR GUI surface onto the navigation GUI surface.

The processor generates an AR graphic interface, which includes a first AR object displaying (outputting, indicating, providing) a driving state of the vehicle of the vehicle, and a second AR object indicating a guide for a driving situation of the vehicle, on the basis of map data acquired from a server, memory, or vehicle and sensing data of the vehicle, and renders the generated AR graphic interface to overlap a front image of the vehicle (S20).

The processor may perform AR merging of the AR graphic interface, which is generated in real time, with the front image of the vehicle in real time.

The processor displays (renders) the AR graphic interface in a state in which the first and second AR objects are combined. When a preset condition is satisfied, the processor displays (renders) the AR graphic interface in a state in which the second AR object is separated from the AR graphic interface.

Here, the preset condition may include a case where a change in driving situation of the vehicle is predicted from a current driving state based on the sensing data of the vehicle. The preset condition may include a case where it is detected that a change in driving situation of the vehicle from a current driving state is predicted or a need to guide the driving situation of the vehicle is predicted based on at least one of ADAS sensing data, high-definition map data, and TCU communication data such as V2X, ITS, and C-ITS.

Then, the processor displays the navigation screen including the front image overlapped by the AR graphic interface (S30).

The processor may render the AR graphic interface on the front image in a state in which the first and second AR objects are combined. The processor may generate the AR GUI surface and the AR camera surface, respectively, by providing the AR GUI frame and the AR camera frame corresponding to the AR graphic interface to the navigation application.

Thereafter, the generated AR GUI surface and AR camera surface are rendered on the navigation GUI surface, so that the front image with the rendered AR graphic interface is included in (displayed on) the navigation screen.

Meanwhile, the AR graphic interface may vary depending on a driving situation that is predicted to change based on the map data and the sensing data of the vehicle.

At this time, the AR graphic interface that varies is displayed with the plurality of AR objects separated, to provide a driver of the vehicle with intuitive guidance for the current driving state and the driving situation that is predicted to change.

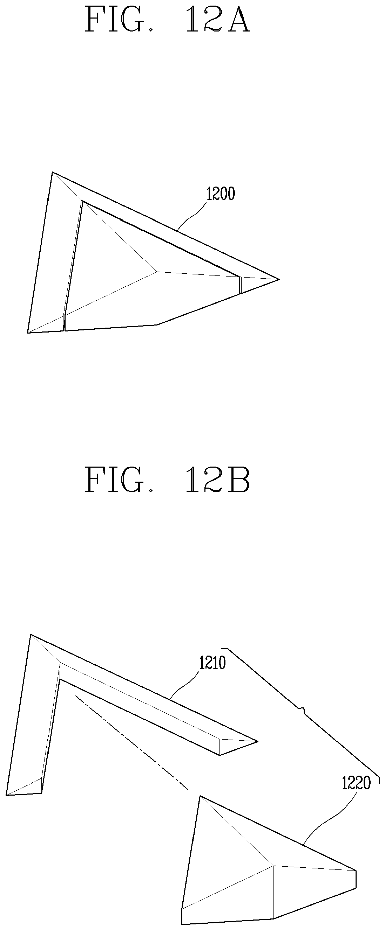

FIGS. 12A and 12B are diagrams illustrating an example of the AR graphic interface according to the embodiment of the present disclosure, which are referenced to describe separation and combination of the first and second AR objects based on a predicted change in driving situation.

Referring to the drawings, an AR graphic interface 1200 may be implemented as an AR image of a specific shape in a 3D form, and the AR image may be used to indicate road information, and the like in addition to a current driving direction, a driving speed, and steering information of the vehicle.

The AR graphic interface 1200 may be implemented in the form in which a first object and a second object are combined with each other.

Here, the first object may be implemented in the form of, for example, a 3D spade (e.g., a shovel-shaped image), and the second object may be implemented in the form of a 3D chevron (e.g., A or V-shaped image) extending from the first object. However, this does not mean that the first and second objects are limited to these shapes.

The first object and the second object of the AR graphic interface 1200 may be combined such that an inner frame of the second object and an outer frame of the first object extend to be in contact with each other. In this case, the first and second objects may be expressed in different colors so as to be visually distinguishable from each other.

The AR graphic interface 1200 may be rendered such that the first and second objects move at the same distorted angle or different distorted angles in a combined state, to indicate the current driving state of the vehicle.

The generated AR graphic interface 1200 is displayed to overlap the front image of the vehicle included in the navigation screen. Specifically, the processor 820 generates the AR graphic interface 1200 indicating the current driving state of the vehicle based on the map data and the sensing data of the vehicle, renders the AR graphic interface 1200 based on route, POI information, etc., and sends the rendered AR graphic interface 1200 to the navigation application 930. Accordingly, the AR graphic interface 1200 is displayed to overlap the front image of the vehicle included in the navigation screen.

Referring to FIG. 12B, the processor 820 may separate the first and second AR objects 1210 and 1220 of the AR graphic interface based on a driving situation that is predicted to change based on the map data and the sensing data of the vehicle, render the separated second AR object 1210 to display guidance related to the changed driving situation, and update the AR GUI surface and the AR camera surface of the navigation application 930.

The condition in which the first and second AR objects 1210 and 1220 are separated may include a case where a change in driving situation of the vehicle is predicted from the current driving state of the vehicle based on the sensing data of the vehicle.

Alternatively, the condition in which the first and second AR objects 1210 and 1220 may include a case where a change in the driving situation of the vehicle or a situation in which a need for guidance is predicted is detected based on at least one of ADAS sensing data, high-definition map data, and TCU communication data such as V2X, ITS, and C-ITS.

Meanwhile, the separated second AR object 1210 is displayed by extending from a display position of the first AR object 1220. Since the first AR object 1220 indicates the current driving state of the vehicle (e.g., the current position and driving direction of the vehicle), the driver can intuitively determine a time point and a driving direction to drive the vehicle according to the guidance indicated by the second AR object 1210.

A spaced distance between the first and second AR objects 1210 and 1220 may correspond to a time point or distance at which the driving situation of the vehicle is predicted to change.

Also, although not illustrated in detail, the separated second AR object 1210 may be implemented by a plurality of fragments. A predetermined interval may be maintained between the plurality of fragments.

In addition, a direction indicated by each of the plurality of fragments may gradually point to a predicted situation occurrence location (or situation end location). For example, if the separated second AR object 1210 is implemented by a total of 5 fragments, each of the 5 fragments may point to the same location (e.g., a predicted situation occurrence location) at different distorted angles.

The plurality of fragments may be displayed in the form of moving a specific distance ahead of the first AR object 1220. That is, the plurality of fragments does not fixedly appear at a specific location or time point but are implemented to provide driving guidance according to a driving situation predicted during movement on the basis of the current location and driving state of the vehicle.

A moving speed of the plurality of fragments may correspond to a degree (e.g., driving speed) that the vehicle approaches closely.

Also, the number and/or display length of the plurality of fragments may be proportional to a time or distance that a predicted situation continues. For example, a larger number of fragments may be included or a total display length may be longer in the case where the situation continues for a long time than that in the case where the situation does not continue for a long time.

A fragment, which is close to the first AR object 1220 among the plurality of fragments, displays a guide to be associated with the driving state indicated by the first AR object 1220.

A fragment, which is farthest away from the first AR object 1220 among the plurality of fragments, displays a guide to be associated with a predicted situation.

That is, the plurality of fragments of the separated second AR object 1210 provides a guide for a situation, which is predicted from the current driving state corresponding to the first AR object 1220, in a more gradual and seamless manner.

When the situation corresponding to the condition that the second AR object 1210 is separated ends, the separated second AR object 1210 is then displayed back in the combined state with the first AR object 1220. That is, the AR graphic interface 1200 as illustrated in FIG. 12A may be displayed again.

The term 'combined state' in the present description means that the first and second AR objects are connected to each other on the screen, or the two AR objects are put relatively closer to each other on the screen than the 'separated state' where the two AR objects are separated from each other. Similarly, the meaning of the expression 'joining the first and second AR objects to each other' in the present description comprises not only connecting the first and second AR objects to each other but also putting the first and second AR objects close together with a relatively smaller gap between them than a case of 'separating the second AR object from the first AR object'.

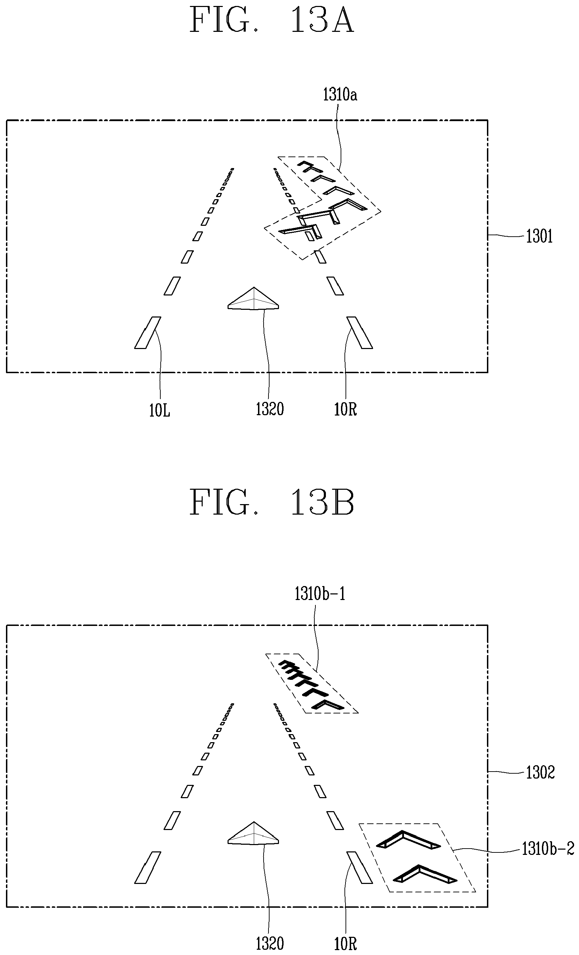

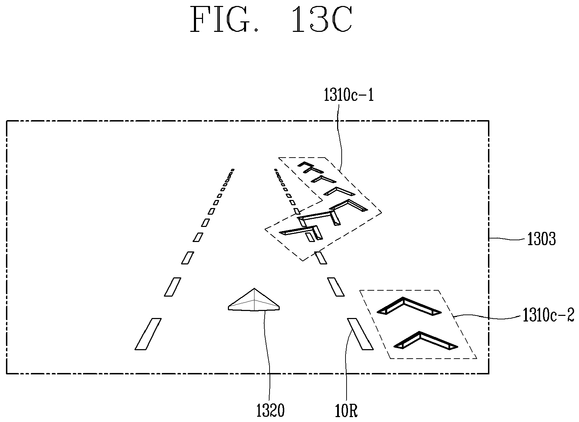

FIGS. 13A, 13B, and 13C are conceptual views referenced to explain a method of providing a UX related to a lane change using an AR graphic interface according to an embodiment of the present disclosure.

There are various functions of an ADAS system for detecting a possibility of collision while driving or attempting to change lanes.

Driving control assistance functions include, for example, adaptive cruise control (ACC), active driving assistance (ADA), lane keeping assistance (LKA), and the like.

Also, collision warning functions include, for example, blind spot warning (BSW), forward collision warning (FCW), lane departure warning (LDW), and the like.

In addition, collision interference functions include, for example, automatic emergency braking (AEB), automatic emergency steering (AES), rear automatic braking (RAB), and the like.

These functions help safe driving by avoiding the possibility of collision, but there are problems such as malfunction or frequent alarms, and there is also a limit in connecting to intuitive recognition of the possibility of collision and guidance for a driving operation to avoid the possibility of collision.

Accordingly, the AR display device 800 according to the present disclosure is implemented to provide a more reliable guidance for intuitive recognition of the possibility of collision and the guidance forthe driving operation to avoid the possibility of collision through a varied AR graphic interface based on ADAS sensing data together with vehicle sensing data (e.g. CAN data (steering wheel angle, driving speed (Speed), and yaw rate (Yawrate)), GPS location/direction information, and map data (lane geometry).

Specifically, the processor 820 runs a preset application (e.g., the navigation application 930) according to an execution of an AR driving mode, and renders an AR graphic interface to overlap a front image of the vehicle based on map data (e.g., navigation/map data). Here, the AR graphic interface is implemented in a combined form of a first AR object indicating a driving state of the vehicle and a second AR object displaying a guide for a driving situation of the vehicle.

The processor 820 provides an AR GUI frame according to the rendering to the navigation application and the navigation application updates an AR GUI surface based on the provided AR GUI frame, thereby displaying the AR graphic interface that varies.

While the vehicle is traveling, the processor 820 may recognize a notification event related to a driving lane detected based on the sensing data, and update the AR graphic interface based on the recognized notification event such that the second AR object is separated from the first AR object and guides a driving lane corresponding to the notification event.

Here, the notification event related to the driving lane of the vehicle may be any one of changing the driving lane, estimating departure from the driving lane, overtaking an object in front, and detecting an object to collide with within a current driving lane or a lane to be changed.

In addition, the sensing data for recognizing the notification event related to the driving lane of the vehicle may be a combination of one or more of CAN data, GPS information, and navigation information with ADAS sensing data.

The processor 820 may detect an object approaching the vehicle based on the sensing data of the vehicle and the map data, and separate some of a plurality of trajectories of the separated second AR object to indicate (guide) a location of the detected object. This can call the driver's attention.

When an object with which the vehicle might collide is detected on a lane to be changed, the processor 820 may change the plurality of trajectories to indicate that the lane change is impossible (not allowed, forbidden), and update some of the changed trajectories to indicate a location of the detected object.

At this time, since the lane change is impossible, a guide trajectory for guiding the lane change is not displayed, and only an indication emphasizing the impossible lane change is output for safe driving.

To this end, the processor 820 may render the plurality of trajectories indicating the impossible lane change to be located on a current driving lane or the lane to which the lane change is impossible.

FIG. 13A illustrates a case where it is confirmed that there is no moving object approaching from the rear of a lane to be changed and the lane change of the vehicle is allowed.

Referring to FIG. 13A, the processor 820 confirms based on the ADAS sensing data that there is no moving object (e.g., a vehicle, a two-wheeled vehicle, a bicycle, an electric kickboard, etc.) approaching the vehicle from the rear of a lane to be changed (e.g., a right lane) 10R. Accordingly, the processor 820 displays a guide trajectory on a front image 1301 of the vehicle through a separated second AR object 1310a to guide the vehicle to change to the right lane (perform a right lane change).

The guide trajectory of the separated second AR object 1310a forms a guide route connected from a first AR object 1320 indicating a current driving state of the vehicle toward the right lane 10R. The first AR object 1320 changes in location, extent of rotation, color (e.g., when a driving speed increases), and the like according to the driving state of the vehicle following the guide trajectory of the second AR object 1310a.

Meanwhile, although not illustrated, even when a lane to be changed is a left lane 10L, the processor 820 may check a moving object approaching from a left rear side, similarly to the above. When no moving object approaching is present, the processor 820 may provide a guide trajectory for guiding the vehicle to change to the left lane (perform a left lane change) on the front image of the vehicle.

FIG. 13B illustrates a case where a lane change of the vehicle is not allowed because a moving object approaching the vehicle is present on a lane to be changed and a possibility of collision is predicted.

Referring to FIG. 13B, the processor 820 confirms, based on ADAS sensing data, a moving object (e.g., a vehicle, a two-wheeled vehicle, a bicycle, an electric kickboard, etc.) approaching the vehicle from the rear of a lane to be changed (e.g., a right lane) 10R.

The processor 820 may determine a possibility of collision with the moving object that approaches from a right rear side, based on ADAS sensing data, vehicle data (e.g., CAN data), and map data such as navigation/map/GPS data.

For example, the processor 820 may determine the possibility of collision by obtaining information related to distance, location, direction, and speed between the moving object approaching from the rear and the vehicle based on the ADAS sensing data.

When a lane change is not allowed due to a predicted possibility of collision, the processor 820 displays the separated second AR object on the front image 1302 of the vehicle such that a portion 1310b-2 of the separated second AR object indicates the location of the approaching moving object while the remaining portion 1310b-1 indicates the disallowed lane change of the vehicle.

At this time, the respective portions 1310b-2 and 1310b-1 of the separated second AR object may be output in different colors and shapes from before, to blink, to be highlighted, and the like, so that the driver can be alert to the approaching moving object and intuit a warning that an approach to the lane is forbidden.

On the other hand, although not illustrated, even when a lane to be changed is a left lane 10L, the processor 820 may check a moving object approaching from a left rear side, similarly to the above. When a moving object approaching is found and a possibility of collision is predicted, the processor 820 may display a warning of a forbidden (non-allowed, impossible) lane change of the vehicle on the front image of the vehicle.

FIG. 13C illustrates a case where a lane change of the vehicle is allowed although an approaching moving object is found on a lane to be changed.

Referring to FIG. 13C, the processor 820 confirms, based on the ADAS sensing data, a moving object (e.g., a vehicle, a two-wheeled vehicle, a bicycle, an electric kickboard, etc.) approaching the vehicle from the rear of a lane to be changed (e.g., a right lane) 10R.

The processor 820 may determine a possibility of collision with the moving object that approaches from a right rear side, based on ADAS sensing data, vehicle data (e.g., CAN data), and map data such as navigation/map/GPS data. For example, the processor 820 may determine the possibility of collision by obtaining information related to distance, location, direction, and speed between the moving object approaching from the rear and the vehicle based on the ADAS sensing data.

However, if the possibility of collision with the approaching moving object is not predicted and thus the lane change is allowed, the processor 820 displays the separated second AR object on the front image 1303 of the vehicle so that a portion 1310c-2 of the separated second AR object indicates a location of the approaching moving object while a remaining portion 1310c-1 indicates a guide trajectory for guiding a right lane change of the vehicle.

At this time, the portion 1310c-2 of the separated second AR object may be displayed after being changed to a color (e.g., orange-based or red color) providing a warning notification to alert the driver to the presence of the approaching moving object.

The guide trajectory 1310c-1 of the separated second AR object forms a guide route connected from the first AR object 1320 providing the current driving state of the vehicle toward the right lane 10R. The first AR object 1320 changes in location, extent of rotation, color (e.g., when a driving speed increases), and the like according to the driving state of the vehicle following the guide trajectory 1310c-1 of the second AR object.

Meanwhile, although not illustrated, even when a lane to be changed is a left lane 10L, the processor 820 may check a moving object approaching from a left rear side, similarly to the above. When it is confirmed that there is no possibility of collision with the moving object approaching, the processor 820 may display a location of the approaching moving object and provide a guide trajectory for guiding the vehicle to change to the left lane (perform a left lane change) on the front image of the vehicle.

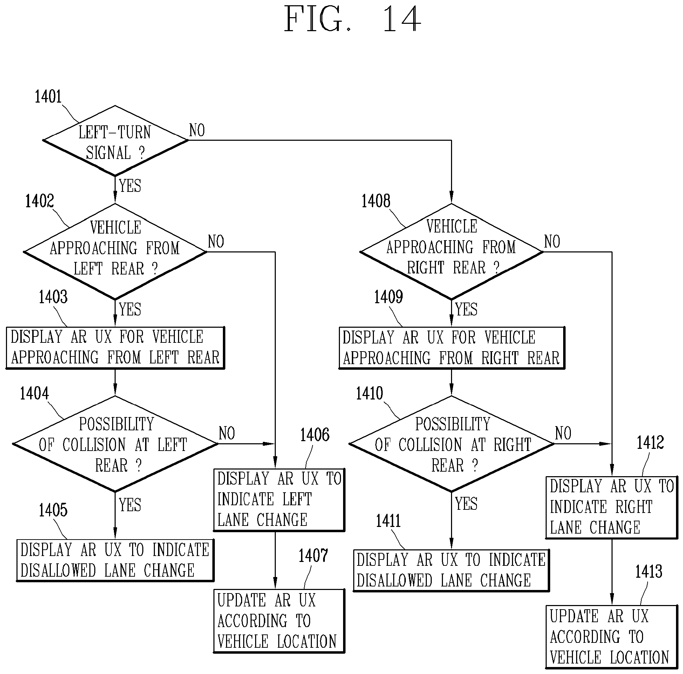

Hereinafter, FIG. 14 is a flowchart illustrating a method of providing a UX related to a lane change using an AR graphic interface according to an embodiment of the present disclosure.

Each step illustrated in FIG. 14 is performed by the processor 820 of the AR display device 800 unless otherwise noted. In addition, each step may be performed by including some of the operations of the navigation engine 910, the AR engine 920, and the navigation application 930 described above with reference to FIGS. 8 to 10, or at least some of the operations may be performed before or after the steps of FIG. 14.

The AR display device 800 according to the present disclosure may render an AR graphic interface in which first and second AR objects are combined on a front image of the vehicle, in response to an execution of an AR driving mode of the vehicle, and the AR graphic interface may vary (e.g., separation, combination, deformation) depending on a driving situation of the vehicle.

The processor 820 may provide a UX associated with a lane change of the vehicle on the front image of the vehicle using the varied AR graphic interface, on the basis of ADAS sensing data together with sensing data of the vehicle (e.g., CAN data, GPS, etc.) and map data.

The processor 820 may detect an input of a left-turn signal of the vehicle based on the data (1401). For example, the processor 820 may recognize the input of the left-turn signal based on sensing data, in response to turn-on of a left-turn signal lamp of the vehicle.

When the input of the left-turn signal is detected, the processor determines whether another vehicle (or a moving object such as a two-wheeled vehicle or an electric kickboard) is approaching from a left rear side based on a current location of the vehicle (1402).

When the another vehicle (or the moving object such as the two-wheeled vehicle, the electric kickboard, etc.) approaching from the left rear side is detected, a portion of the separated second AR object is moved to a location of the another vehicle approaching from the left rear side and displayed thereon (1403). For example, the portion of the second AR object is changed in color (or changed in shape/highlighted) and displayed on the left rear side based on the location of the first AR object.

Continuously, the processor 820 determines whether a possibility of collision is predicted between the vehicle and the another vehicle (orthe moving object such as the two-wheeled vehicle, the electric kickboard, etc.) approaching from the left rear side (1404), and when the possibility of collision is predicted, the processor 820 indicates that the lane change is not allowed through the separated second AR object (1405).

According to the determination (1404), when the possibility of collision with the approaching another vehicle from the left rear side is not predicted, the processor 820 displays a lane change guide trajectory through the separated second AR object (1406).

At this time, the lane change guide trajectory displayed by the separated second AR object is updated according to the driving state (e.g., location, driving direction, driving speed) of the vehicle (1407).

For example, when the vehicle follows the lane change guide trajectory at high speed, the color of the first AR object is changed based on the driving speed of the vehicle. Also, when the vehicle completes the lane change by following the lane change guide trajectory, the first and second objects are updated to be displayed in the combined form instead of displaying the approaching another vehicle and the guide trajectory.

On the other hand, when an input of a right-turn signal is detected, the processor determines whether another vehicle (or a moving object such as a two-wheeled vehicle, an electric kickboard, etc.) is approaching from a right rear side based on a current location of the vehicle (1408).

When the another vehicle (or the moving object such as the two-wheeled vehicle, the electric kickboard, etc.) approaching from the right rear side is detected, a portion of the separated second AR object is moved to a location of the another vehicle approaching from the right rear side and displayed thereon (1409). For example, as illustrated in FIG. 13C, the portion 1310c-2 of the second AR object may be changed in color (or changed in shape/highlighted) and displayed on the right rear side based on the location of the first AR object 1320.

Continuously, the processor 820 determines whether a possibility of collision is predicted between the vehicle and the another vehicle (orthe moving object such as the two-wheeled vehicle, the electric kickboard, etc.) approaching from the right rear side (1410), and when the possibility of collision is predicted, the processor 820 indicates that the lane change is not allowed through the separated second AR object (1411).

For example, as illustrated in FIG. 13B, the processor 820 may change the color (or change the shape/highlight) of the portion 1310b-1 of the second AR object, and may not display a guide trajectory connected to the first AR object so as for the driver to intuitively confirm that the lane change is not allowed. Both of the portions 1310b-1 and 1310b-2 of the second AR object may be displayed only on a lane to which the lane change is not allowed, and for example, may be displayed on a boundary of the lane to which the lane change is not allowed.

According to the determination (1410), when the possibility of collision with the approaching another vehicle from the right rear side is not predicted, the processor 820 displays a lane change guide trajectory through the separated second AR object (1412).

At this time, the lane change guide trajectory displayed by the separated second AR object is updated according to the driving state (e.g., location, driving direction, driving speed) of the vehicle (1413).

For example, when the vehicle follows the lane change guide trajectory at high speed, the color of the first AR object is changed based on the driving speed of the vehicle.

Also, for example, when the vehicle 100 completes the lane change by following the lane change guide trajectory displayed through the portion 1310c-1 of the second AR object, as illustrated in FIG. 13C, the processor 820 updates the AR graphic interface to be displayed in the combined form of the first and second objects instead of displaying the approaching another vehicle and the guide trajectory.

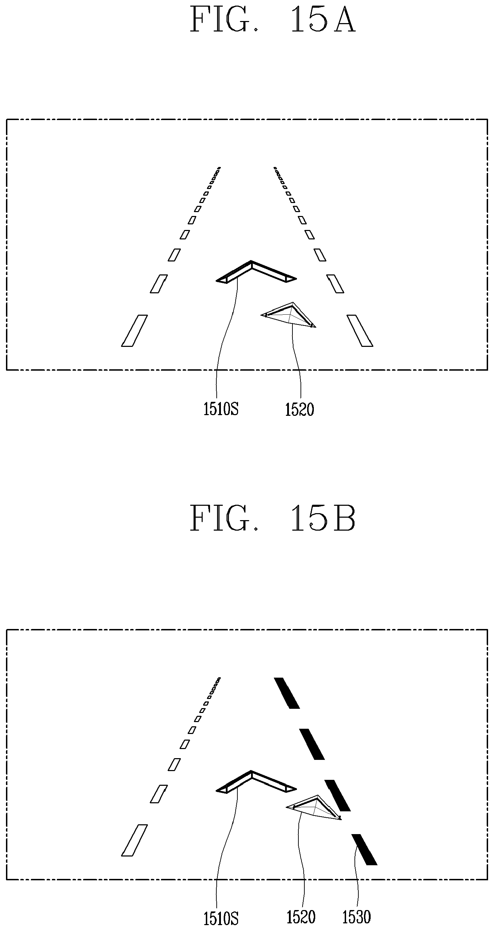

Hereinafter, FIGS. 15A and 15B are conceptual views illustrating a method of providing a UX related to lane keeping using an AR graphic interface.

The AR display device 800 according to the present disclosure may detect a situation in which there is concern about a possibility of lane departure even when it is not a case where the vehicle changes a lane, and accordingly, may separate the second AR object to output a warning notification and display a location at which the vehicle has to be located for lane keeping.

Specifically, the processor 820 may detect a notification event associated with lane keeping, based on ADAS sensing data together with sensing data (e.g., CAN data (steering wheel angle, driving speed (Speed), yaw rate (Yawrate)), GPS location/direction information, and map data (e.g., navigation/map data (lane geometry)).

Here, the notification event related to the lane keeping occurs when a deviation (bias) in a lateral direction (left or right) or a possibility of departure is detected based on a pose of the vehicle in a current driving lane.

In addition, the pose of the vehicle in the current driving lane may be acquired by the processor 820 by way of calculating a location of the vehicle within the driving lane, a lateral offset up to a boundary of the lane to which the vehicle is deviated, speed/acceleration in the lateral direction, a wheel angle of the vehicle, and the like.

The processor 820 may predict a lane departure time point of the vehicle based on the pose of the vehicle (e.g., lateral speed/acceleration, etc.) in the current driving lane, and display warning through the AR graphic interface before the predicted lane departure time point (by additionally considering a reaction time of the driver).

Specifically, the processor 820 may update the AR graphic interface such that the first AR object displays a driving pose of the vehicle in the current driving lane and the second AR object is separated to display at least one of a first guide for inducing a change in the driving pose of the vehicle and a second guide for alerting the vehicle to a lane departure, in response to a prediction of the lane departure as the notification event associated with the driving lane.

For example, the processor 820 may display the first guide through the separated second AR object when the deviation of the vehicle in the driving lane is detected, and display both the first and second guides through the separated second AR object when the prediction of the lane departure of the vehicle is detected.

Here, the first guide may be displayed when the deviation of the vehicle is detected, and may include location, pose, and driving direction of the vehicle that are suggested.

In addition, the first guide may be displayed in front of the first AR object indicating the current driving state of the vehicle, so that the vehicle intuitively follows it.

The first guide may also be displayed in different color and shape from the first AR object or may be highlighted to output an intuitive warning.

The first guide may not be displayed when the possibility of deviation or lane departure of the vehicle is predicted no longer.

Here, the second guide is displayed when the lane departure of the vehicle is predicted, and is displayed before the lane departure prediction time point.

The second guide may also be displayed in different color and shape from the first AR object or may be highlighted to output an intuitive warning.

Also, the second guide may be displayed on or at least partially overlap a lane boundary in a direction in which the vehicle is to depart.

In addition, the second guide may display a warning in the form of blinking the same lane image on the lane boundary.

The second guide is displayed together with the first guide for inducing a change in pose of the vehicle to keep the driving lane of the vehicle.

The second guide may not be displayed when the possibility of lane departure of the vehicle is predicted no longer.

The processor 820 may determine (a lane departure time point of the vehicle and) a time point of warning the lane departure of the vehicle based on the driving speed of the vehicle, and update the second AR object to display the second guide at a location corresponding to an estimated lane departure direction at the determined time point.

The processor 820 may update the driving pose indicated by the first AR object and update the second AR object to be located at a center of the driving lane when the deviation of the vehicle within the driving lane is determined to exceed a threshold range (or value).

Meanwhile, an actual pose of the vehicle changes in real time during driving. When such a pose change is reflected on the first AR object in real time, screen flickering that the first AR object flickers slightly occurs. Accordingly, the processor 820 according to the present disclosure may operate to apply the updated first AR object (when determined as a lane deviation) to the front image of the vehicle when the threshold range is exceeded.

In addition, in order to prevent the driver's fatigue from increasing due to frequent warnings by the first and second guides, a calculation of a vehicle pose value for lane keeping and a calculation of a lane departure prediction time point may be performed in real time and the update of the indications by the first and second guides may be performed only when a reference value (or weight) is satisfied.

For example, the processor 820 may differently apply update and display time points of the first and second guides based on a width of a lane and a size of the vehicle when a distance between the vehicle and the lane boundary and a predetermined reference value (or weight) (e.g., the number of deviations (biases), etc.) are satisfied.

FIG. 15A illustrates an example of warning lane deviation of the vehicle through the first guide.

In FIG. 15A, the first AR object 1520 indicates the current driving state of the vehicle, that is, the location, pose (Roll, Pitch, Yaw), and driving direction of the vehicle, and the separated second AR object 1510s is displayed at a center of the lane ahead of the first AR object 1520 in a direction of a corrected pose.

The separated second AR object 1510s provides a guide (the first guide) for lane keeping. The driver (or vehicle) can correct the lane deviation and prevent lane departure in advance by following the first guide and performing a vehicle steering control.

FIG. 15B illustrates an example of warning a lane departure of the vehicle through the first and second guides.

In FIG. 15B, the first AR object 1520 indicates the current driving state of the vehicle, that is, the location, pose (Roll, Pitch, Yaw), and driving direction of the vehicle, and a portion of the separated second AR object, namely, the first guide 1510s is displayed to indicate a corrected pose direction at a center of the lane ahead of the first AR object 1520.

In addition, a remaining portion of the separated second AR object or a third AR object, that is, the second guide 1530 displays a warning along the lane boundary to prevent the lane departure of the vehicle. At this time, as described above, the color change, the shape change, or the highlighting may be applied forthe warning.

The portion 1510s of the separated second AR object provides a guide (the first guide) for lane keeping. The driver can correct the lane deviation and prevent the lane departure in advance by following the first guide and performing the vehicle steering control.

Meanwhile, for lane departure warning, the processor 820 may display the second guide and simultaneously transmit a control signal or the like for additional warning through an audio output, haptic output, or the like of the vehicle.

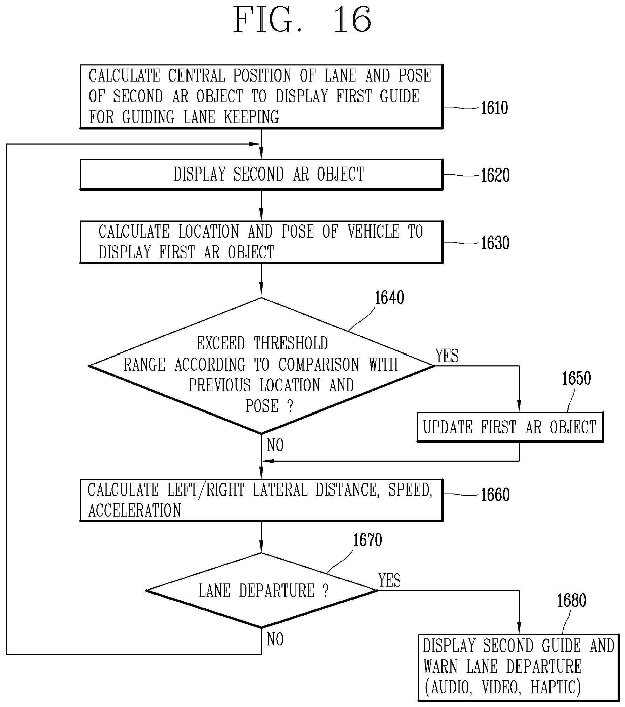

FIG. 16 is a flowchart illustrating a method of providing a UX related to lane keeping using an AR graphic interface.

The AR display device 800 according to the present disclosure may detect a notification event associated with lane keeping, based on ADAS sensing data together with sensing data (e.g., CAN data (steering wheel angle, driving speed (Speed), yaw rate (Yawrate)), GPS location/direction information, and map data (e.g., navigation/map data (lane geometry)).

The AR display device 800 may update the AR graphic interface to display a guide related to a driving lane corresponding to the detected notification event.

Accordingly, the processor 820 of the AR display device 800 may provide an AR GUI frame corresponding to the updated AR graphic interface to the navigation application, and allow the navigation application to update an AR GUI surface, so that an AR navigation screen can be output.

Each step of FIG. 16 may be performed by the processor (or the AR engine) unless otherwise noted. In addition, the processes of FIG. 16 may be performed by including the operations of the navigation engine 910, the AR engine 920, and the navigation application 930 by the processor 820 described above with reference to FIGS. 8 to 10, or at least some of the operations may be performed before or after the processes of FIG. 16.

The processor 820 may render the guide related to the driving lane corresponding to the notification event on the front image of the vehicle by using the first AR object and the separated second AR object.

First, the processor 820 calculates a central location of the driving lane and a pose of the second AR object to display the first guide for guiding lane keeping (1610).

The pose of the second AR object means pitch, roll, and yaw values corresponding to a suggested corrected pose direction. The central location of the driving lane corresponds to a display location of the first guide.

When a preset display criterion is satisfied, the processor 820 displays the separated second AR object in the form of the first guide on the front image of the vehicle (1620). Here, the case where the preset display criterion is satisfied means a case where the vehicle is currently driving by being deviated to a lane boundary (e.g., a left/right lane boundary, etc.) by a reference value or more. The first guide indicates a desired location where the vehicle should be located in order to keep a lane.

Next, the processor 820 calculates a location and a pose value of the vehicle to display the first AR object corresponding to the current driving state of the vehicle (1630).

The processor 820 may calculate a location of the vehicle in the lane, a lateral offset to the deviated lane boundary, speed/acceleration in the lateral direction, a wheel angle of the vehicle, and the like, based on the sensing data of the vehicle, the map data, and the ADAS sensing data, and thus calculate the pitch, roll, and yaw values.

The processor 820 compares previous location and pose values of the first AR object with current location and pose values of the vehicle, and determines whether a threshold range is exceeded (1640). As a result of the determination (1640), when there is a change that exceeds the threshold range, the processor 820 updates the first object (1650).

This is to prevent screen flickering that the first AR object rendered on the front image of the vehicle flickers slightly when the change of the pose, which changes in real time during the driving of the vehicle, is reflected on the first AR object in real time.

As a result of the determination 1640, when there is no location and pose change that exceeds the threshold range or the update of the first AR object is performed, the processor 820 calculates distance, speed, and acceleration in the left and right lateral directions based on the driving lane (1660), and calculates a possibility of lane departure.

When the possibility of lane departure is detected, the processor 820 displays a second guide warning the lane departure of the vehicle on the front image of the vehicle (1680). In this case, the lane departure warning may be accompanied by audio output and haptic output.

The first and second guides are no longer displayed on the front image of the vehicle when the lane deviation and/or the possibility of lane departure are not detected or when the corresponding function is terminated, and the first and second AR objects are displayed in the combined form on the front image of the vehicle.

According to the embodiment discussed above, a lane change prohibition is displayed through the separated AR object when the lane change is not allowable, and also an intuitive change guide route is provided through the separated AR object when the lane change is allowable, which greatly helps safe driving and lane change driving.

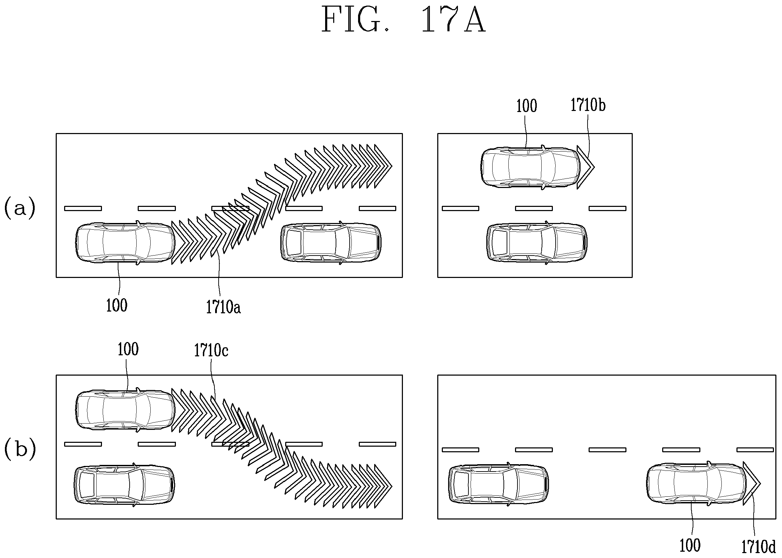

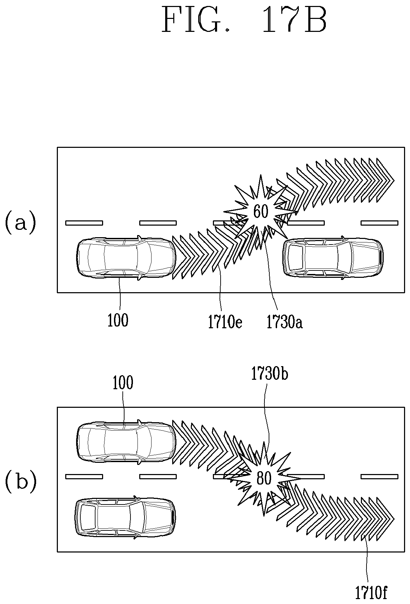

FIGS. 17A and 17B illustrates examples of a method of providing a guide UX related to overtaking a preceding vehicle using an AR graphic interface according to an embodiment of the present disclosure.

The AR display device 800 according to the present disclosure may recognize an overtaking attempt as a notification event associated with lane keeping, based on ADAS sensing data together with sensing data (e.g., CAN data (steering wheel angle, driving speed (Speed), yaw rate (Yawrate)), GPS location/direction information, and map data (e.g., navigation/map data (lane geometry)).

Overtaking should be performed at safe speed and by a safe method in consideration of driving speed, driving direction, and other driving situations of a preceding vehicle.

The processor 820 may update the separated second AR object to display guide trajectories indicating an avoidance route and an overtaking point of a target object, in response to a recognition of the overtaking as the notification event associated with the driving lane.

Here, the avoidance route includes a lane change (or detour) route (a first part of the avoidance route) for overtaking a preceding vehicle, and a change route (a second part of the avoidance route) for returning to an original lane at a calculated point.

Here, the target object is a target to be overtaken that moves in front of the vehicle within the same lane, and examples of the target object may include another vehicle, a two-wheeled vehicle, an electric kickboard, a bicycle, and the like.

Here, the overtaking point means a lane change point, namely, a crossing point that is included in each of the first and second parts of the avoidance route. The overtaking point is located at the left side of the target object unless there are special circumstances.

Meanwhile, the overtaking may be performed within the same lane or may be performed while changing a lane depending on location and width of the target object.

In the case of overtaking within the same lane (e.g., overtaking a bicycle, electric kickboard, etc. within the same lane), the processor 820 generates an avoidance route (a plurality of guide trajectories) along which the vehicle detours around a left side of the target object within the same lane, and displays the generated avoidance route on the front image of the vehicle using the separated second AR object. At this time, when the separated second AR object is displayed, an avoidance steering assist device such as a high beam may be operated to cause attention to the target object.

When overtaking is performed by changing a lane, it is performed in a manner that the vehicle moves to a left lane of the target object to overtake, overtakes the target object, and then returns to the original lane.

Specifically, the processor 820 combines the separated second AR object with the firstAR object, in response to completion of the lane change of the vehicle, and separates the second AR object from the first AR object to display guide trajectories for indicating a location of a lane to return, in response to the current location of the vehicle being close to an overtaking point of the target object. The processor 820 updates the separated second AR object to keep displaying the guide trajectories in the separated state until the vehicle completes the overtaking.
(a) of FIG. 17A illustrates the first part of the avoidance route, and (b) f FIG. 17A illustrates the first part of the avoidance route.

When the overtaking starts, the processor 820 separates the second AR object to display a first route (including a plurality of guide trajectories) 1710a for guiding a movement to a left lane of the target vehicle. At this time, when a moving object is present in the left lane, the processor 820 may guide a non-allowable lane change using the second AR object and display the first route 1710a after the moving object has passed or a safe distance is secured.

When the lane change along the first route is completed, that is, when the vehicle moves to the left lane along the first route and is located alongside the target vehicle, the separated second AR object is displayed in the combined form (1710b) with the first AR object.

However, when the vehicle is located behind the target vehicle due to acceleration of the target vehicle, the combined second AR object 1710b is separated again to display a plurality of guide trajectories for guiding the vehicle to move straight at a faster driving speed.

Then, the processor 820 displays a second route (including a plurality of guide trajectories) 1710c for guiding the vehicle to return to the original lane by overtaking the target vehicle. At this time, when there is another vehicle in front of the target vehicle in the lane to return, the processor 820 may guide the non-allowable lane change until a safe distance is secured, and may display the second route 1710c after the situation ends.

When the lane change (return) along the second route is completed, that is, when the vehicle moves to the original lane along the second route and is located in front to the target vehicle while securing the safe distance, the separated second AR object is displayed in the combined form (1710d) with the first AR object.

Meanwhile, the length, shape, etc. of the first and second routes may vary by considering the location, driving speed, and driving direction of the target vehicle to be overtaken, and other driving situations (e.g., a case where a preceding vehicle in the current lane changes a lane first, etc.).

In addition, each of the first and second routes includes a point at which a lane is changed, that is, a crossing point, and the vehicle performs a lane change near a target vehicle at the crossing point. Therefore, it may be necessary to guide an appropriate driving speed for safe driving.

Therefore, the processor 820 may update the separated second AR object to include the crossing point corresponding to the overtaking point of the target object and driving speed information for passing the crossing point between the plurality of guide trajectories to be driven by the vehicle, on the basis of the current location and driving state of the vehicle.

Referring to FIG. 17B, the processor 820, for example, may display first required driving speed information 1730a (e.g., '60 km/h') which is proposed on a crossing point of a first route 1710e, based on location and driving speed of the target vehicle, which is calculated based on ADAS sensing data, and an existence of a moving object approaching from the rear in a left lane.

Next, after the vehicle changes to the left lane, the processor 820 may display second required driving speed information 1730b (e.g., '80 km/h') which is proposed on a crossing point of a second route 1710f, based on the location and driving speed of the target vehicle, which is calculated based on the ADAS sensing data, and an existence of a moving object in front in a return lane.

On the other hand, each speed value displayed in the first and second required driving speed information may vary by reflecting a real-time driving speed of the target vehicle and an existence of an adjacent moving object detected through the ADAS sensing data.

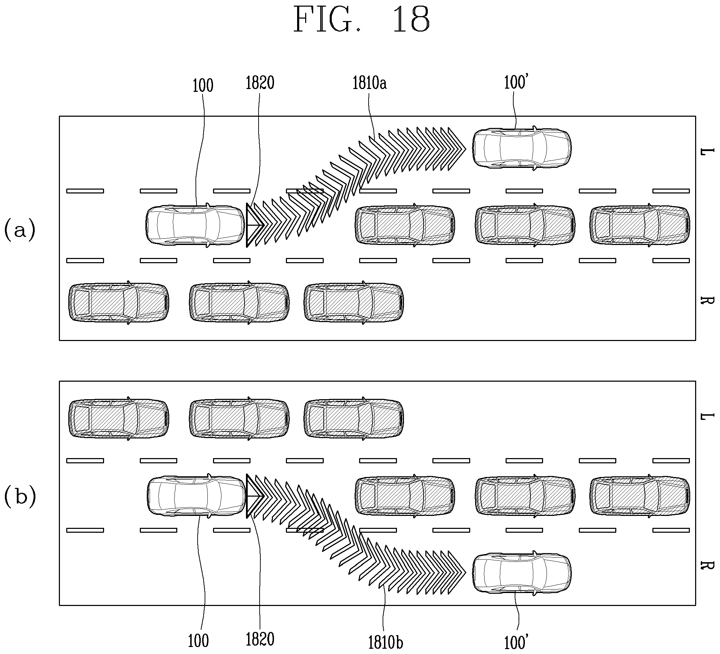

Hereinafter, a method of providing a UX related to Automatic Emergency Steering (AES) using an AR graphic interface according to an embodiment of the present disclosure will be described with reference to FIG. 18.

The processor 820 of the AR display device 800 according to the present disclosure may detect a front object, with which the vehicle is likely to collide, as a notification event related to a driving lane, based on sensing data (e.g., CAN data (steering wheel angle, driving speed (Speed), yaw rate (Yawrate)), GPS location/direction information, map data (e.g., navigation/map data (lane geometry)), and ADAS sensing data (e.g., camera, radar, lidar).

The processor 820 may determine an avoidance driving lane based on the current location of the vehicle and the ADAS sensing data, in response to the detection of the front object to collide with the vehicle, and render the separate second AR object to display guide trajectories forthe vehicle to travel according to the determination.

When an object to collide with the vehicle is detected in front of the vehicle during driving through an ADAS system, the vehicle 100 according to the present disclosure activates an Automatic Emergency Braking (hereinafter, 'AEB') function to perform emergency braking or activates an Automatic emergency steering (hereinafter, 'AES') function to perform automatic avoidance driving.

In the present disclosure, when the AES function is activated, an avoidance driving route may be guided to the vehicle through an AR graphic interface.

The AES function is a function that detects a potential collision of the vehicle and automatically controls a steering control device to prevent or reduce severity of the collision. Some systems may detect pedestrians or other objects.

For example, when a collision with a front vehicle (or front object) is predicted through a Time To Collision (TTC) determination with the front vehicle, the processor 820 selects a lane with the lowest possibility of a rear-end collision of left and right lanes based on a current driving lane, and calculates AES trajectories.

Here, the Time To Collision (TTC) means a time required for the vehicle to collide with a target object, assuming that an approaching speed of the vehicle that is predicted to collide is constant.

The processor 820 displays predicted trajectories based on the AES trajectories on the front image of the vehicle using the separated second AR object, and displays the current driving state of the vehicle (e.g., location, driving direction, steering angle, etc.) using the first AR object.

That is, an avoidable steering wheel (steering angle) in a dangerous situation is displayed as a plurality of guide trajectories through the separated second AR object, so that the driver can intuitively recognize an avoidance route.

When a risk of collision is detected and can be avoided by emergency braking using the AEB function, the AEB function is executed.

When the risk of collision is detected but cannot be avoided by the emergency braking, the processor 820 separates the second AR object and displays guide trajectories corresponding to automatic avoidance driving according to the AES function through the separated second AR object. The AES function selects a safer lane to allow avoidance driving.
(a) of FIG. 18 illustrates guide trajectories when AES to a left side L is safer.
   As illustrated, when it is determined that it is safer to perform AES to the left side L due to a vehicle existing in a right lane and/or a vehicle approaching from a right rear side, the processor 820 displays predicted trajectories 1820a and a predicted final position 100' of the vehicle 100 through the separated second AR object. At this time, since the predicted trajectories 1820a and the predicted final location 100' of the vehicle 100 are displayed at least simultaneously with the execution of the AES, the driver can grasp an automatic avoidance driving route in advance.
(b) of FIG. 18 illustrates guide trajectories when AES to a right side R is safer.

As illustrated, when it is determined that it is saferto perform AES to the right side R due to a vehicle existing in a left lane and/or a vehicle approaching from a left rear side, the processor 820 displays predicted trajectories 1820b and a predicted final position 100' of the vehicle 100 through the separated second AR object. At this time, since the predicted trajectories 1820b and the predicted final location 100' of the vehicle 100 are displayed at least simultaneously with the execution of the AES, the driver can grasp an automatic avoidance driving route in advance.

In this way, when the automatic avoidance driving according to the AES function is terminated, the separated second AR object is displayed again in the combined form with the first AR object.

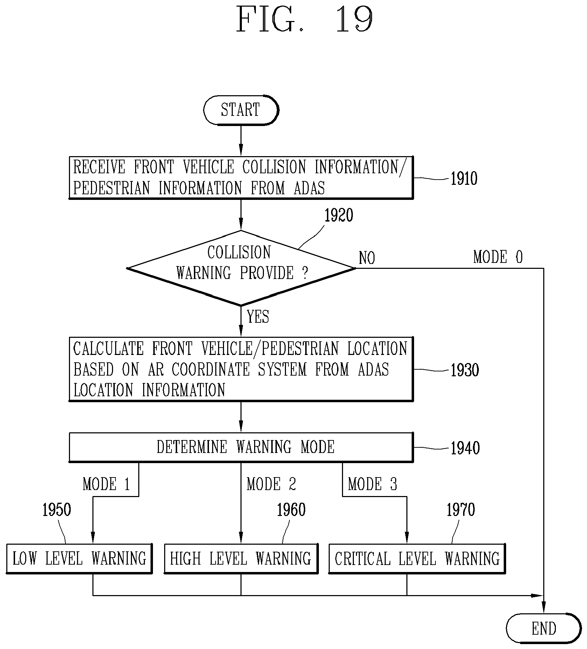

FIG. 19 is a flowchart illustrating a method of providing a UX related to a forward collision possibility warning using an AR graphic interface according to an embodiment of the present disclosure.

Each step illustrated in the flowchart of FIG. 19 may be performed by the processor (orthe AR engine) unless otherwise noted. In addition, the processes of FIG. 19 may be performed by including the operations of the navigation engine 910, the AR engine 920, and the navigation application 930 by the processor 820 described above with reference to FIGS. 8 to 10, or at least some of the operations may be performed before or after the processes of FIG. 19.

The processor 820 may obtain information related to an object in front with which collision is impending (e.g., front vehicle collision information, pedestrian information) based on ADAS sensing data while the vehicle is traveling (1910).

The processor 820 determines whether it is necessary to provide a collision warning based on the obtained information (1920). When the collision warning is required, the processor 820 calculates a location of the front collision-impending object (e.g., front car, pedestrian), which is converted from ADAS location information according to an AR coordinate system (1930)

Based on a result of the location calculation, the processor 820 executes a warning mode (1940), determines a warning notification level, and displays a different warning notification depending on a degree of danger.

For example, the processor 820 calculates a relative location of the object based on the current location of the vehicle and the ADAS sensing data, in response to the detection of the front collision-impending object based on the ADAS sensing data of the vehicle, and renders an alarm object, which varies depending on the calculated relative location (depending on the degree of collision possibility), on the front image of the vehicle.

Here, the alarm object may be an AR image that wraps around an outer shape of the detected object in a spiral ring shape. In addition, the color and shape of the alarm object may vary depending on a predicted degree of collision possibility.

Specifically, in a first mode (low level), a warning notification corresponding to the separated second AR object is displayed in a color (e.g., yellow), shape, etc. representing the low level (1950). In a second mode (high level), the warning notification corresponding to the separated second AR object is displayed in a color (e.g., orange), shape, etc. representing the high level (1960). In a third mode (critical level), the warning notification corresponding to the separated second AR object is displayed in a color (e.g., red), shape, etc. representing the critical level (1970).

At this time, the warning notification UXs corresponding to the first to third modes may be displayed together with other output modules (e.g., audio output, haptic output, etc.) of the vehicle according to the degree of danger.

According to an AR display device and a method for operating the same according to some embodiments of the present disclosure, a current location of a vehicle and a predicted driving situation can be simultaneously guided on a front image, which is calibrated even without separate setting, using AR objects, thereby providing a more intuitive and realistic AR guidance to the vehicle. Possibility of collision can be predicted when the vehicle changes lanes, so as to notify a driver of whether or not the lane change is allowed, instead of providing a simply warning notification. A separated AR object can be used to indicate prohibition of the lane change (non-allowable lane change) when the lane change is not allowed, and to provide an intuitive lane change guide route when the lane change is allowed, thereby greatly assisting safe driving and lane changing driving. In addition, a lane departure can be prevented by providing an intuitive AR interface without driving interruption due to frequent warning alarms. When overtaking another vehicle in front, it is determined whether the vehicle can safely overtake the another vehicle in front, and route and driving speed for safe overtaking are provided to assist safe and convenient driving. Furthermore, a detection of a front/rear-side collision-impending object is notified using an intuitive AR object other than sound, helping safe driving without interfering with driving of a vehicle.

The present disclosure can be implemented as computer-readable codes (applications or software) in a program-recorded medium. The method of controlling the autonomous vehicle can be realized by a code stored in a memory or the like.

The computer-readable medium may include all types of recording devices each storing data readable by a computer system. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and may also be implemented in the form of a carrier wave (e.g., transmission over the Internet). The computer may include the processor or the controller. Therefore, the detailed description should not be limitedly construed in all of the aspects, and should be understood to be illustrative.

## Claims

1. An augmented reality, AR, display device (800) for a vehicle comprising:
a communication module (810) configured to receive image data including a front image of the vehicle, location data including a current location of the vehicle, map data relating to the current location of the vehicle, and sensing data of the vehicle;
a processor (820) configured to activate a preset application to render an AR graphic interface (1200) overlapping the front image, the AR graphic interface including a first AR object (1220, 1320, 1520, 1820) indicating a current driving state of the vehicle and a second AR object (1210, 1310a, 1510S, 1710a, 1710b, 1710c, 1710d, 1710e, 1710f, 1810a, 1810b) indicating a guide for driving based on the current location of the vehicle and the map data; and
a display (830) configured to display a navigation screen including the front image overlapped by the AR graphic interface (1200) according to the rendering,
wherein the processor (820) is further configured to update the AR graphic interface (1200), in response to a notification event related to a driving lane of the vehicle recognized based on the sensing data and the current location of the vehicle updated, in a manner that separating the second AR object from the first AR object and rendering to change the separated second AR object into an guide image (1310a, 1310b-1, 1310b-2, 1310c-1, 1310c-2, 1530, 1710a, 1710c, 1710e, 1710f, 1810a, 1810b) associate with the driving lane corresponding to the notification event.

2. The AR display device (800) of claim 1, wherein the notification event related to the driving lane of the vehicle comprises any one of changing the driving lane, predicting departure from the driving lane, overtaking a front object, and detecting a collision-impending object within a current driving lane or a lane to be changed.

3. The AR display device (800) of any one of claim 1 or 2, wherein the sensing data of the vehicle includes a combination of ADAS sensing data of the vehicle and one or more of CAN data, GPS information, and navigation information of the vehicle.

4. The AR display device (800) of any one of claims 1 to 3, wherein the processor (820) is further configured to update the AR graphic interface, in response to a determination of a change of the driving lane of the vehicle as the notification event based on the sensing data of the vehicle, such that the first AR object is rendered in a current driving lane of the vehicle on the front image and the separated second AR object is rendered to include a plurality of trajectories images (1310a, 1310b-1, 1310b-2, 1310c-1, 1310c-2, 1710a, 1710c, 1710e, 1710f, 1810a, 1810b) toward a driving lane to be changed as the guide image.

5. The AR display device (800) of claim 4, wherein the processor (820) is further configured to detect an object approaching the vehicle based on the sensing data of the vehicle and the map data relating to the current location of the vehicle updated, and separates at least one of the plurality of trajectories images (1310a, 1310b-1, 1310b-2, 1310c-1, 1310c-2, 1710a, 1710c, 1710e, 1710f, 1810a, 1810b) from the separated second AR object to point a location of the detected object by the separated at least one trajectory image (1310b-2, 1310c-2).

6. The AR display device (800) of claim 4, wherein when an object with a possibility of collision is detected in the driving lane to be changed, the processor (820) is further configured to change the plurality of trajectories images (1310a, 1310b-1, 1310b-2, 1310c-1, 1310c-2, 1710a, 1710c, 1710e, 1710f, 1810a, 1810b) to indicate that the driving lane change is not allowed, and update some of the changed trajectories images to indicate a location of the detected object.

7. The AR display device (800) of claim 6, wherein the processor (820) is further configured to update the plurality of trajectories images indicating that the driving lane change is not allowed to be located in the current driving lane of or a lane to which the driving lane change is not allowed.

8. The AR display device (800) of any one of claims 1 to 7, wherein the processor (820) is further configured to update, in response to prediction of a departure of the driving lane as the notification event associated with the driving lane of the vehicle, the AR graphic interface such that the first AR object (1520) is rendered to indicate a driving pose of the vehicle in the current driving lane and the separated second AR object is rendered to include at least one of a first guide image (1510S) for guiding a change in the driving pose of the vehicle and a second guide image (1530) for alerting a lane departure so as for the vehicle to keep the current driving lane.

9. The AR display device (800) of claim 8, wherein the processor (820) is further configured to determine a time point for warning departure from the driving lane based on a driving speed of the vehicle, and update the separated second AR object to be changed into the second guide at a location corresponding to an predicted lane departure direction at the determined time point.

10. The AR display device (800) of claim 8, wherein the processor (820) is further configured to update the driving pose indicated by the first AR object and update the separated second AR object to display the first guide at a center of the driving lane, when deviation within the driving lane is determined to exceed a threshold range.

11. The AR display device (800) of any one of claims 1 to 10, wherein the processor (820) is further configured to update the separated second AR object to display a plurality of trajectories images indicating an avoidance route and an overtaking point of a target object, in response to recognition of the overtaking as the notification event related to the driving lane.

12. The AR display device (800) of claim 11, wherein the processor (820) is further configured to render the separated second AR object to be joined with the first AR object when the driving lane change of the vehicle is completed while the vehicle travels along the avoidance route, and
separate the second AR object from the first AR object to display the plurality of trajectories images indicating a location of a lane to return when a current location of the vehicle approaches the overtaking point of the target object within a predetermined distance.

13. The AR display device (800) of claim 11, wherein during the overtaking, the processor (820) is further configured to update the separated second AR object to keep displaying the plurality of trajectories images to be driven by the vehicle in the separated state until the vehicle completes the overtaking.

14. The AR display device (800) of claim 13, wherein the processor (820) is further configured to update the separated second AR object to include a crossing point of a lane corresponding to the overtaking point of the target object and driving speed information for passing the crossing point between the plurality of trajectories images to be driven by the vehicle, on the basis of the current location of the vehicle and driving state of the vehicle.

15. The AR display device (800) of any one of claims 1 to 14, wherein the processor (820) is further configured to calculate, in response to a detection of a front object with a possibility of collision based on ADAS sensing data of the vehicle, a location of the detected front object based on the current location of the vehicle and the ADAS sensing data of the vehicle, and render an alarm object changed depending on the calculated location overlapping the front image.
